(19) Europäisches Patentamt
European Patent Office
Office européen des brevets

(11) **EP 0 672 004 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(21) Anmeldenummer: **94900763.7**

(22) Anmeldetag: **04.12.1993**

(51) Int. Cl.$^6$: **B62D 55/20**, B62D 55/12, B62D 55/092

(86) Internationale Anmeldenummer:
**PCT/DE93/01171**

(87) Internationale Veröffentlichungsnummer:
**WO 94/13525 (23.06.1994 Gazette 1994/14)**

(54) **GLEISKETTE FÜR KETTENFAHRZEUGE**

CRAWLER CHAIN FOR TRACKED VEHICLES

CHENILLE POUR VEHICULES CHENILLES

(84) Benannte Vertragsstaaten:
**AT BE CH DE FR GB IT LI SE**

(30) Priorität: **11.12.1992 DE 4241774**
**12.03.1993 DE 4307898**
**08.05.1993 DE 4315355**
**26.08.1993 DE 4328701**

(43) Veröffentlichungstag der Anmeldung:
**20.09.1995 Patentblatt 1995/38**

(73) Patentinhaber: **INTERTRACTOR AKTIENGESELLSCHAFT**
**D-58285 Gevelsberg (DE)**

(72) Erfinder:
• **KETTING, Michael**
**D-58252 Ennepetal (DE)**
• **WOYDT, Mathias**
**D-13465 Berlin (DE)**
• **KUNKEL, Wolfang**
**D-58097 Hagen (DE)**
• **BÖTTGER, Friedrich**
**D-42781 Haan (DE)**
• **FISCHER, Karl-Friedrich**
**D-08107 Kirchberg (DE)**

(74) Vertreter: **Köchling, Conrad, Dipl.-Ing. et al**
**Patentanwälte, Dipl.-Ing. Conrad Köchling**
**Dipl.-Ing. Conrad-Joachim Köchling**
**Fleyer Strasse 135**
**58097 Hagen (DE)**

(56) Entgegenhaltungen:
EP-A- 0 069 799          WO-A-91/01459
DE-A- 3 629 613          US-A- 4 246 689

• **PATENT ABSTRACTS OF JAPAN vol. 10, no. 204 (M-499)(2260) 17. Juli 1986 & JP,A,61 046 774 (HITACHI METALS LTD.) 7. März 1986**
• **PATENT ABSTRACTS OF JAPAN vol. 8, no. 140 (M-305)(1577) 29. Juni 1984 & JP,A,59 037 327 (MITSUBISHI KıNZOKU K. K.) 29. Februar 1984**
• **MANUFACTURING TECHNOLOGY NOTE PB80-979380 REPORT NUMBER: AMMRC TR-79-40 MAI 1980 FILING CODE: 71F-028**

# Beschreibung

Die Erfindung betrifft eine Gleiskette für Kettenfahrzeuge, insbesondere kettengetriebene Baufahrzeuge, bestehend aus Kettenbuchsen, Kettenbolzen und Kettengliedern aus Stahl, wobei die innenliegenden Kettengliedenden auf die Kettenbuchse aufgepreßt sind, die außenliegenden Kettengliedenden auf die die Buchse überragenden Kettenbolzenenden aufgepreßt sind und die Kettenbuchse von dem Kettenbolzen durchgriffen ist (siehe DE-A-3629613).

Bisher ist es üblich, alle Bestandteile der Gleiskette aus Stahl zu fertigen. Bei diesen Gleisketten entsteht ein erheblicher Verschleiß insbesondere der Kettenbuchse in dem Bereich zwischen Kettenbolzen und Kettenbuchse sowie in dem außenliegenden Kettenbuchsenbereich zwischen den innenliegenden Kettengliedenden, die auf die Buchse aufgepreßt sind. Zur Verminderung des Verschleißes zwischen Kettenbuchse und Kettenbolzen sind auch schon geschmierte oder gefettete Ketten bekannt. Eine Verminderung des Verschleißes des äußeren Kettenbuchsenbereiches, der zwischen den inneren Kettengliedern liegt, wird aber im Stand der Technik bisher nicht erörtert.

Ausgehend von diesem Stand der Technik liegt der Erfindung die Aufgabe zugrunde, eine Gleiskette gattungsgemäßer Art zu schaffen, die geringer verschleißanfällig ist bzw. einem geringeren Verschleiß unterliegt als bisher übliche Gleisketten.

Zur Lösung dieser Aufgabe wird vorgeschlagen, daß die Kettenbuchse aus Hartmetall, Verbundfaserwerkstoffen, Ingenieurkeramiken und/oder vorzugsweise aus Keramik-Keramik-Verbundwerkstoffen auf Basis von $Si_3N_4$ (Siliziumnitrit) mit weniger als 15 Gewichtsprozent Sinteradditiv besteht. Durch diese Ausbildung wird eine Kettenbuchse geschaffen, die nur gering verschleißanfällig ist. Bei der Materialauswahl zur Herstellung der Kettenbuchse ist darauf zu achten, daß das Bruchwachstum des Werkstoffes im unterkritischen Bereich liegt. Der Weibull-Modul ist kleiner als 20 %. Die Festigkeit und die Zähigkeit sind durch Verwendung und Dosierung geeigneter Additive auf ein für jeden konkreten Anwendungsfall in Gleisketten optimalen Wert einzustellen, wobei besonders auf Homogenität des Buchsenwerkstoffes zu achen ist.

Durch diese Ausbildung wird eine Verringerung des Gelenkverschleißes, insbesondere des Buchenverschleißes erreicht, wobei sich dieser Vorteil bei geschmierten oder gefetteten Ketten lediglich auf dem Buchsenaußenverschleiß bezieht, während bei trockenen Ketten sowohl der Buchsenaußenverschleiß als auch der Gelenkinnenverschleiß minimiert ist. Selbst bei geschmierten oder gefetteten Ketten, die in Folge Undichtigkeit kein Schmiermittel oder Schmierfett mehr enthalten, ist eine Verminderung des Verschleißes bei weiterer Inbetriebnahme einer solchen Kette gewährleistet.

Besonders bevorzugt ist vorgesehen, daß die Preßpassung zwischen Kettenglied und Kettenbuchse bezüglich eines erforderlichen Toleranzfeldes der das Buchsenauge bildenden Bohrung des Kettengliedes und eines Toleranzfeldes des Außendurchmessers der Kettenbuchse so eingestellt ist, daß sich aufgrund des niedrigeren Dehnungskoeffizienten der Kettenbuchsen im Verhältnis zu Stahl im Preßverbund mit dem Stahlmaterial des Kettengliedes eine Passung ergibt, die eine auf elastische Verformung zurückzuführende Pressung gewährleistet.

Die erfindungsgemäße Ausbildung ermöglicht die Ausbildung von üblichen, bisher trocken-abgedichteten Kettengelenken, bei denen eine Quasiabdichtung durch Tellerfedern zwischen Kettenglied und Buchse erfolgt.

Auch trockene Ketten, bei denen das Gelenk ohne jegliche Abdichtung und Schmierung ist, erreichen eine erheblich höhere Lebensdauer als bisher, wobei die Verschleißarmut es ermöglicht, daß auf gefettete oder geschmierte Ketten mit Abdichtung verzichtet werden kann, da die mit solchen Ketten erreichten Lebensdauern auch mit der erfindungsgemäß ausgebildeten Gleiskette zu erreichen sind.

Die Erfindung betrifft weiter eine Gleiskette gemäß Anspruch 1 und/oder 2, wobei die Gleiskette Kettenbolzen mit axialer Sacklochausnehmung und radialer Querausnehmung aufweisen, die mit öl- oder fettartigen Schmiermitteln gefüllt und deren axiale Sacklochausnehmung an ihrem offenen Ende mittels geeigneter Verschlußmittel verschließbar ist, wobei zwischen Kettenbolzen und Kettenbuchse ein Schmierspalt ausgebildet ist, der axial außen durch Dichtmittel geschlossen ist, welche Dichtmittel zwischen der Stirnseite der Kettenbuchse und der Korrespondenzfläche des äußeren Kettengliedes angeordnet sind. Bei solchen Gleisketten wird es als besonders vorteilhaft angesehen, daß die Dichtmittel durch

a) eine elastische Dichtung (Dichtring) und einen zu diesem radial innenliegenden Stützring vorzugsweise aus dem Material gemäß Kennzeichenteil des Anspruches 1 gebildet sind, wobei der Stützring ein separates Teil ist oder an die Stirnseiten der Kettenbuchsen angeformt ist (Anformung 15),

b) einen durch die Buchsenstirnseite gebildeten, an diese angeformten Gleitring und eine aus gleichem Material bestehende Gleitringdichtung mit elastischem Federmittel gebildet sind, die durch das Federmittel, welches sich axial gegenüber der Buchsenstirnfläche an Teilen des äußeren Kettengliedes abstützt, gegen den Gleitring auf Anlage gepreßt ist.

Diese Ausbildung ermöglicht es wie bisher abgedichtete Ketten zu fertigen, die mit bisher üblichen sowie gegebenenfalls besonderen, für die angegebenen Materialen geeigneten Schmier- und Gleitmitteln einschließlich hydrodynamischer Schmierstoffe gefüllt sind, wobei also der Gelenkbolzen als Hohlbolzen mit Sackloch und Querverbindung ausgebildet ist und der Schmierspalt durch entsprechende Dichtungen zwischen Glied und Bolzen und Stützring ausgebildet ist. Auch die Ausbildung eines Gleitringes ist in der angegebenen Art und Weise möglich.

Bei fettgeschmierten Ketten üblicher Bauart ist der Bolzen als Vollbolzen ausgebildet, welche Aufbauart aber ebenfalls unter Einsatz der oben genannten Materialien vorteilhaft ist.

Eine bevorzugte Weiterbildung wird darin gesehen, daß der Kettenbolzen aus dem Material gemäß Kennzeichenteil des Anspruches 1 besteht.

Eine solche Kombination von Keramikbuchse und Keramikbolzen ist vorallem bei trockenen Ketten (Kettengelenken) vorteilhaft, da nur bei solchen Ketten ein Innengelenkverschleiß zwischen Buchse und Bolzen auftritt. Obwohl der Verschleißvorteil besonders gut bei einer Reibpaarung zwischen Keramik/Stahl auftritt, ist auch bei einer Reibpaarung zwischen Keramik/Keramik eine Verschleißminderung im Innenbereich zu erwarten, insbesondere dann, wenn zwischen den Korrespondenzflächen von Keramikbolzen und Keramikbuchse geeignete Schmierstoffe eingelagert sind.

Bei dieser Ausbildung ist bevorzugt vorgesehen, daß die Preßpassung zwischen Kettenbolzen und Kettenglied gemäß Anspruch 2 ausgeführt ist.

In Weiterbildung wird vorgeschlagen, daß die Kettenbuchse aus Hartmetall, Faserverbundwerkstoffen, Keramik-Keramik-Verbundwerkstoffen und/oder Ingenieurkeramiken auf Basis $Si_3N_4$ (Siliziumnitrit) mit weniger als 15 Gewichtsprozent Sinteradditiv, einem Bruchwachstum im unterkritischen Bereich, einer Bruchzähigkeit kleiner 20 MPa $\sqrt{m}$ und hoher Homogenität des Werkstoffes bei Realisierung eines Weibull-Modules von größer als 10, vorzugsweise größer als 20, besteht.

Eine vorteilhafte Weiterbildung wird darin gesehen, daß die Oberflächen sowie Stirnflächen der Buchsen entsprechend den Anforderungen, die an die im Anspruch 1 oder 6 genannten Materialien bezüglich des Verschleißverhaltens und der Realisierung einer Preßpassung gestellt sind, mechanisch bearbeitet sind, vorzugsweise im Zahneingriffsbereich, ggf. in der Bohrung sowie den Stirnflächen aber unbearbeitet sind, d.h. insbesondere diese Oberflächen einer in den technisch üblichen Verfahren des Pressens, Heißpressens, Sinterpressens, Sinterns, Gasdrucksinterns o.ä. Technologien von Materialien gemäß Anspruch 1 oder 6 entstehenden Oberflächenrauheiten (ohne weitere Bearbeitung) entsprechend und gemäß den Anforderungen dieser Herstellungsverfahren bzw. der entsprechenden Materialien toleriert sind.

Bei den bisher üblichen Metallbuchsen war stets eine Bearbeitung und enge Tolerierung erforderlich, was kostenintensiv und daher nachteilig ist. Durch die erfindungsgemäße Ausbildung wird also eine kostengünstige und sehr haltbare Lösung zur Verfügung gestellt.

Desweiteren ist bevorzugt vorgesehen, daß die Buchse als Zapfenbuchse ausgebildet ist, wobei der Zapfen konstruktiv so ausgelegt ist, daß unter Berücksichtigung der Ausführung des Antriebs- und Leitrades eines Kettenantriebes bzw. einer Kettenführung der Durchmesser der Buchse den festigkeitsoptimalen Anforderungen bezüglich des Einsatzes von Materialien gemäß Anspruch 1 oder 6 entspricht, die Oberflächenrauheit der Buchse im Zapfen- bzw. Zahneingriffsbereich der bisher üblichen Ausführungsform entspricht, vorzugsweise aber der einer gepreßten, heißgepreßten, sintergepreßten, gesinterten bzw. gasdruckgesinterten für die Materialien gemäß Anspruch 1 oder 6 oder nach ähnlichen Technologien hergestellten entspricht und zwar ohne weitere Bearbeitung und gemäß den Anforderungen dieser Herstellungsverfahren bzw. der entsprechenden Materialien toleriert ist, wobei die Radien im Übergangsbereich zwischen Preßbereich der Buchse und Zapfen so ausgeführt sind, daß eine entsprechend den Forderungen der Materialien nach Anspruch 1 oder 6 optimale Festigkeitsgeometrie erreicht wird, vorzugsweise der Radius R = 3 mm bis 8 mm realisiert ist.

Solche Zapfenbuchsen sind an sich im Stand der Technik bekannt. Bei bisherigen Zapfenbuchsen ist die Verschleißproblematik Grund für die Ausbildung des zusätzlichen Zapfens, der in der Regel eine relativ geringe Höhe hat. Bei der Ausbildung aus dem erfindungsgemäßen Material ist diese Höhe größer anzunehmen, damit eine entsprechende Haltbarkeit und Festigkeit erreicht wird.

Vorzugsweise ist ferner vorgesehen, daß das Gelenk der Kette so ausgeführt ist, daß Buchse und Bolzen bei den bisher üblichen Ausführungen zu einem Teil, nämlich einem Kompaktbolzen, bestehend aus Stahl, vorzugsweise aber aus Materialien gemäß Anspruch 1 oder 6 vereinigt sind und die Scharnierung durch eine Spielpassung zwischen dem Auge des im Gelenkverbund innenliegenden Kettengliedes und dem Kompaktbolzen ermöglicht ist.

Weitere vorteilhafte Ausbildungen sind in den weiteren Ansprüchen bezeichnet.

Die Erfindung betrifft ferner ein Antriebsrad oder eine Antriebsradgrundscheibe mit Antriebsradsegmenten für den Antrieb von Gleisketten, Förderketten und ähnlichen Antriebssystemen.

Es ist üblich, solche Antriebsradgrundscheiben oder auch komplette Antriebsräder mit einer unterschiedlichen Anzahl von Antriebszähnen aus Stahl oder Guß für den Antrieb von Gleisketten, vorzugsweise kettengetriebener Fahrzeuge der Bau-, Land- und Forstwirtschaft sowie Spezialmaschinen im Straßenbau und anderen Industriezweigen, Förderketten und ähnlichen Antriebssystemen zu benutzen. Dazu werden bisher Antriebsradsegmente auf eine Antriebsradgrundscheibe, z.B. eine Flanschscheibe, einen Anschraubkranz oder einen Anschweißring, die mit der Getriebe- oder Antriebswelle in Verbindung gebracht wird, aufgeschraubt. Es gibt auch Ausführungsformen, bei denen komplette Antriebsradkränze oder komplette Antriebsräder eingesetzt werden, bei denen die Antriebsradgrundscheibe und die Antriebszähne aus einem Stück bestehen.

Bisher ist es üblich, solche Antriebsradsegmente oder auch komplette Antriebsräder aus Stahl, vorzugsweise Vergütungsstahl oder Guß vorzugsweise Sphäroguß zu fertigen. Im praktischen Einsatz der Antriebsräder entsteht ein erheblicher Verschleiß (Verschleißbetrag), insbesondere im Eingriffsbereich der Kettenbuchse an der Zahnung des Antriebsrades oder Antriebsradsegmentes.

Ausgehend von dem eingangs bezeichneten Stand der Technik liegt der Erfindung die Aufgabe zugrunde, ein Antriebsrad oder Antriebsradsegemt der beschriebenen Art zu schaffen, welches gering verschleißanfällig ist bzw. einem geringen Verschleißbetrag unterliegt.

Zur Lösung dieser Aufgabe wird vorgeschlagen, daß das gesamte Antriebsradsegment oder die Zähne des Segmentes oder Teile der Zähne des Segmentes aus Hartmetall, Faserverbundwerkstoffen, Keramik-Keramik-Verbundwerkscoffen und/oder Ingenieurkeramiken bzw. Hochleistungskeramiken, vorzugsweise aus verschleißbeständigen Eisenbasis-Sinterwerkstoffen mit besonders vorzugsweise verschleißreduzierender Schutzschicht und einem Ausgangspulver aus Ferrochrom und Eisen als Matrixmaterialien und Borcarbid als Hartstoffphase bzw. aus Zirkonoxiden oder auf der Basis nichtosidischer Keramik, wie z.B. $Si_3N_4$ (Siliziumnitrit), mit weniger als 15 Gewichtsprozent Sinteradditiv besteht, das Rißwachstum im Werkstoff während der gesamten Betriebsdauer im unterkritischen Bereich liegt, die Bruchzähigkeit $K_{Ic}$ einen Wert von vorzugsweise 5 MPa $\sqrt{m}$ nicht unterschreitet und die Festigkeit und Zähigkeit durch Verwendung und Dosierung geeigneter Additive auf einen definierten Wert eingestellt wird, wobei besonders die Homogenität des Werkstoffes gesichert ist und die Streuung der Werkstoffkennwerte, insbesondere der Festigkeit durch den Weibull-Modul m von größer als 10, vorzugsweise größer 20, festgelegt ist.

Diese Werkstoffe sind auch bei Gleisketten oder dergleichen bevorzugt.

Die grundsätzliche Lösung besteht darin, daß durch den Einsatz entsprechender, verschleißmindernd wirkender Werkstoffe die Funktionsfähigkeit des anderen Systems im Sinne der Aufgabenstellung verbessert ist.

Bevorzugte Weiterbildungen sind in den Ansprüchen 16 bis 23 bezeichnet. Die konstruktive Auslegung ist zumindest partiell den Festigkeitsanforderungen (Festigkeit, Zähigkeit, Homogenität) der angegebenen Werkstoffe angepaßt. Es ist auch der Materialeinsatz der genannten bevorzugten Werkstoffe in oder an Stahl- bzw. Gußgrundkörpern möglich, wobei in diesen Fällen ebenfalls spezielle Ausbildungen zum Einbringen des Einsatzmaterials angewendet werden.

Durch die erfindungsgemäße Ausbildung wird ein Antriebsradsegment bzw. Antriebsrad mit geringerer Verschleißintensität geschaffen.

Die Erfindung ist bei bisher üblichen konstruktiven Ausführungen anwendbar. Bei der Ausbildung von Antriebsradsegmenten ist aber bevorzugt eine Segmentgröße von ein bis drei Zähnen vorgesehen, da dies den werkstoffspezifischen Gegebenheiten besser gerecht wird. Im Stand der Technik sind bisher Segmentgrößen von drei bis fünf Zähnen und in Sonderfällen sogar von bis zu 14 Zähnen und mehr üblich.

Infolge der Materialauswahl wird auch die Anschraubverbindungsmöglichkeit zahlenmäßig erhöht sowie die konstruktive Auslegung der Verbindungsausführung sowohl im Zahnsegment selbst als auch im Gegenstück (Antriebsradgrundscheibe) den konkreten Festigkeitsbedingungen des erfindungsgemäßen Werkstoffes angepaßt.

Die Erfindung betrifft ferner eine Gleiskette für Kettenfahrzeuge, insbesondere kettengetriebene Baufahrzeuge, bestehend aus Kettenbuchsen, Kettenbolzen und Kettengliedern aus Stahl, wobei die innenliegenden Kettengliedenden auf die Kettenbuchse aufgepreßt sind, die außenliegenden Kettengliedenden auf die die Buchse überragenden Kettenbolzenenden aufgepreßt sind und die Kettenbuchse vom Kettenbolzen durchgriffen ist.

Ausgehend von dem Stand der Technik, der eingangs beschrieben ist, liegt der Erfindung die Aufgabenstellung zugrunde, eine Gleiskette gattungsgemäßer Art zu schaffen, die geringer verschleißanfällig ist bzw. einem geringerem Verschleiß unterliegt als bisher übliche Gleisketten.

Zur Lösung dieser Aufgabe wird vorgeschlagen, daß vorzugsweise die Kettenbuchse aus Hartmetall, Verbundfaserwerkstoffen, Ingenieurkeramiken und/oder aus Keramik-Keramik-Verbundwerkstoffen auf Basis von $Si_3N_4$ (Siliziumnitrit) mit weniger als 15 Gewichtsprozent Sinteradditiv besteht und die Kettenbuchse aus Stahl, vorzugsweise aber aus den in Anspruch 1 oder 6 angegebenen Materialien unter Zugrundelegung der dort festgelegten Materialwerte und Spezifikationen und darauf aufbauenden Bauteilauslegungen und -dimensionierungen im Innenbereich der Buchse, das heißt, im Gelenkbereich zwischen äußerer Bolzenkontur (Buchseninnenmantel) konstruktiv so ausgelegt ist, daß die Innenkontur der Buchse sich der Bolzenkontur, die sich bei Belastung der Ketten durch Biegung des Bolzens ergibt, annähert.

Bevorzugt ist dabei vorgesehen, daß die Kettenbuchse aus den in Anspruch 14 bis 16 und Anspruch 15 bis 23 angegebenen Materialien unter Zugrundelegung der dort festgelegten Materialwerte und Spezifikationen bzw. darauf aufbauender Bauteilauslegungen und -dimensionierungen im Innenbereich der Buchse gemäß Anspruch 24 ausgelegt ist.

Desweiteren ist bevorzugt vorgesehen, daß der Innenkonturbereich der Buchsen bezogen auf die Mündungsausläufe der Buchsen oder auch bezogen auf den Bereich von der Buchsenmitte bis zu den Buchsenenden (Buchsenstirnseiten) einer im wesentlichen stetigen, nicht linearen Funktion, vorzugsweise der durch die Biegelinie des Bolzens vorgegebenen Funktion angenähert ist, dies insbesondere bezogen auf die Betrachtung des Bolzens als einseitig (mittig) eingespannten Stab, analytisch in der Form

$$y = K \, (1 - \frac{3x}{2\,l} + \frac{1x^3}{2\,l^3})$$

oder bei Betrachtung als beidseitig eingespannten Bolzen in der Form

$$y = K^* \, (\frac{x^3}{l^2} - \frac{4x^3}{3\,l^3}),$$

wobei mit K und K* Faktoren bezeichnet sind, die sich aus der wirkenden Kraft, sowie Material- und Dimensionierungskenngrößen ergeben und 1 der ganzen bzw. halben Bolzenlänge entspricht.

Insbesondere kann auch vorgesehen sein, daß in Abhängigkeit vom konkreten Anwendungsfall und den Fertigungsmöglichkeiten auch andere Funktionen realisiert werden, beispielsweise eine korbbogenförmig gewölbte Kontur mit unterschiedlichen Radienausführungen, eine Potenzfunktion, eine Expotentialfunktion oder eine Logarithmusfunktion.

Durch die erfindungsgemäßen Vorschläge wird die Ausführung der Innenkontur der Kettenbuchsen in Anlehnung an die Biegelinie des Bolzens bzw. gemäß den vorgeschlagenen nicht linearen Funktionen in ganz besonderem Maße der Ausführung der Buchsen mit den vorgeschlagenen Materialien gerecht, da diese einen anderen Dehnungskoeffizienten aufweisen als Stahl.

Ist beispielsweise die Buchse aus den bevorzugt genannten Materialien gemäß Anspruch 1 bzw. präzisierend nach Anspruch 6 und weiter präzisierend nach Anspruch 15 ausgeführt und besteht der Bolzen aus Stahl, so ergeben sich aufgrund des niedrigen Dehnungskoeffizienten des Buchsenmaterials höhere Biegungen beim Bolzen als bei der Buchse, was zu Berührungen zwischen Buchse und Bolzen führt und dadurch Ausbrüche am Buchsenrand eintreten können, wodurch die Funktionsfähigkeit der Kette erheblich beeinträchtigt ist.

Für Buchsen aus Stahl sind technische Lösungen im Stand der Technik bekannt, wobei die Innenkontur der Buchsen so ausgeführt ist, daß eine Abknickung vom ursprünglich geraden Bereich (im Mittelbereich) erfolgt, wobei diese Abknickung selbst auch wieder als Gerade ausgeführt ist.

Diese Lösung bringt lediglich den Vorteil mit sich, daß beim Aufpressen der Kettenglieder im wesentlichen die ursprünglich gerade Innenkontur durch die nach innen übertragenen Wirkungen der Preßpassung nach dem Pressen wiederum eine Gerade wird. Eine erfindungsgemäße Anpassung an die Bolzenbiegung bei Belastung der Kette wird bei dieser Lösung nicht erreicht. Außerdem ergeben sich bei linearer Abknickung Grenzen in Bezug auf die dimensionierungsseitige Größe der Abknickung, da durch übermäßigen Schrägauslauf der Innenkontur der für die Funktion der Kette notwendige Kettenausschlag (bezogen auf die Länge der Kette) nicht mehr genau eingehalten werden kann.

Bei der erfindungsgemäß vorgeschlagenen Lösung ist die Dimensionierung gemäß den Belastungen der Ketten bei unterschiedlichen Kettentypen optimal auszulegen, indem eine direkte Anpassung der nicht linearen Buchseninnenkontur an den Bolzen erfolgt, wodurch das Problem des Kettenausschlages optimiert werden kann.

Ausgehend von diesem Problempunkt ist damit das Wesen der Erfindung auch auf Ketten anwendbar, in denen die Buchsen nicht mit den bevorzugten Materialien ausgerüstet sind, also auf Ketten mit Stahlbuchsen.

Ausführungsbeispiele der Erfindung sind in der Zeichnung gezeigt und im folgenden näher beschrieben.

Es zeigt:

Fig. 1 bis 5     Die Kettengelenke von unterschiedlich ausgebildeten Gleisketten im Schnitt gesehen,

Fig. 6 bis 10     unterschiedliche Ausbildungen von Kettengelenken an Gleisketten,

Fig. 11     ein Antriebsradsegment mit Antriebsradgrundscheibe in Ansicht und im Querschnitt,

Fig. 12     eine Variante in einer teilweisen Querschnittsansicht,

Fig. 13     eine Variante in Ansicht,

Fig. 14     eine weitere Variante in Ansicht,

Fig. 15 bis 25c     Einzelheiten in unterschiedlicher Darstellung.

In Figur 26 ist eine erfindungsgemäß ausgebildete Buchse im Querschnitt gezeigt.

In Figur 27 ist die in der Praxis auftretende Biegebelastung von Bolzen und Buchsen sowie Kettengliedern einer Gleiskette dargestellt.

In Figur 28 ist der in der Beschreibung genannte Stand der Technik gezeigt.

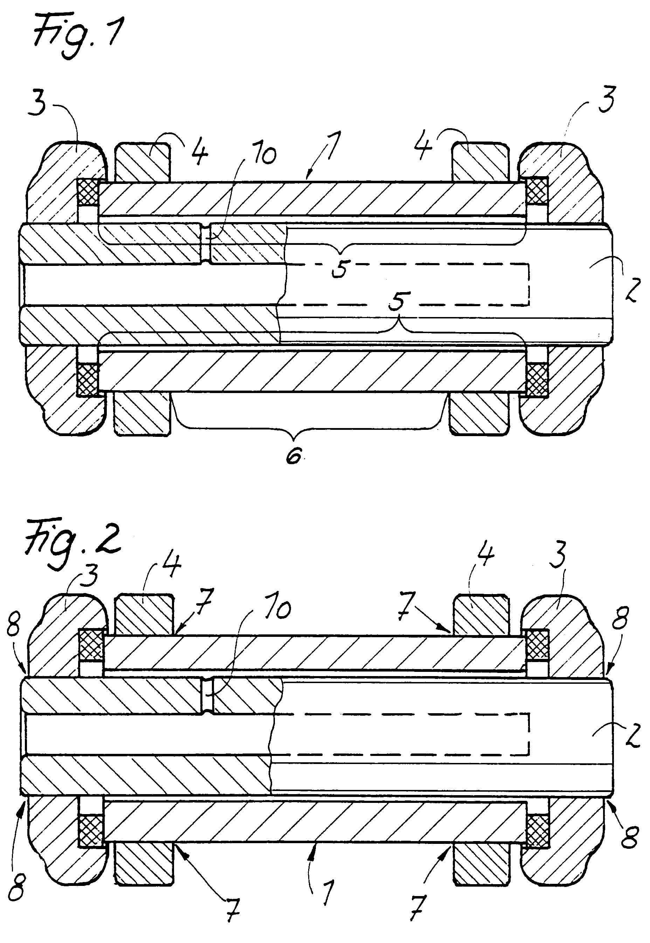

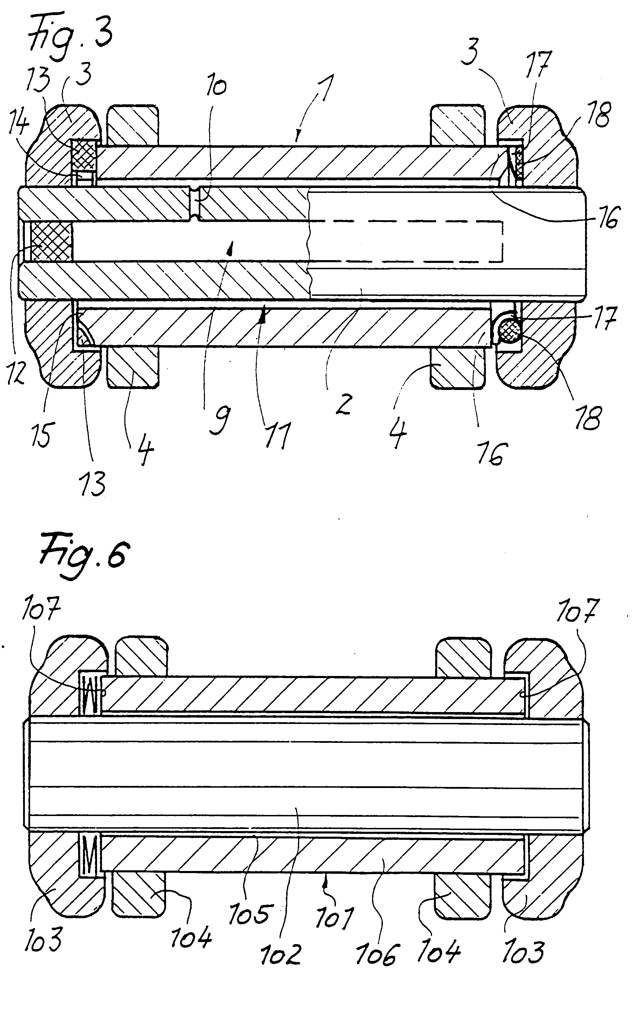

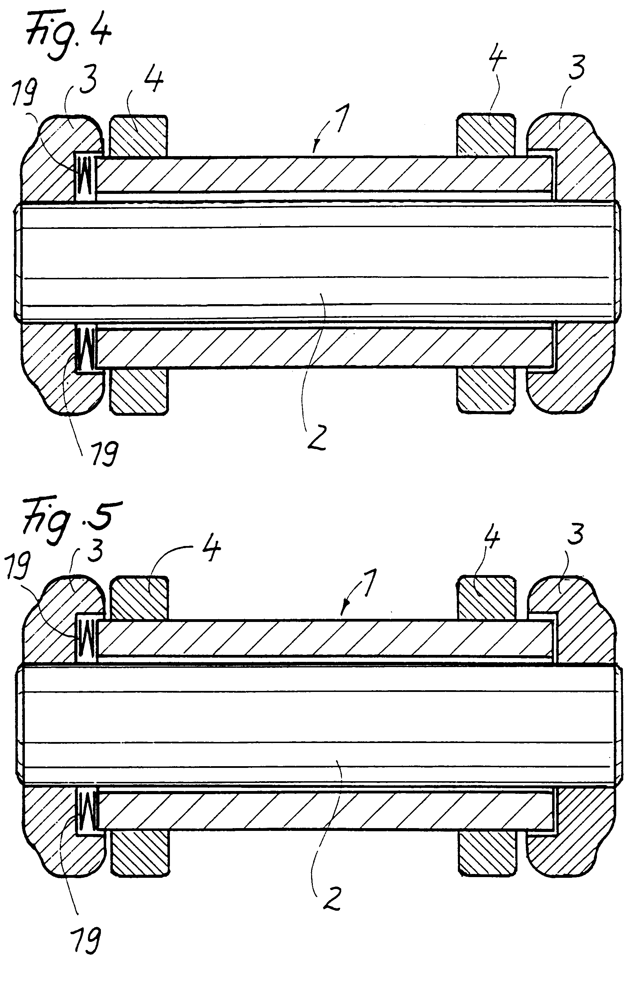

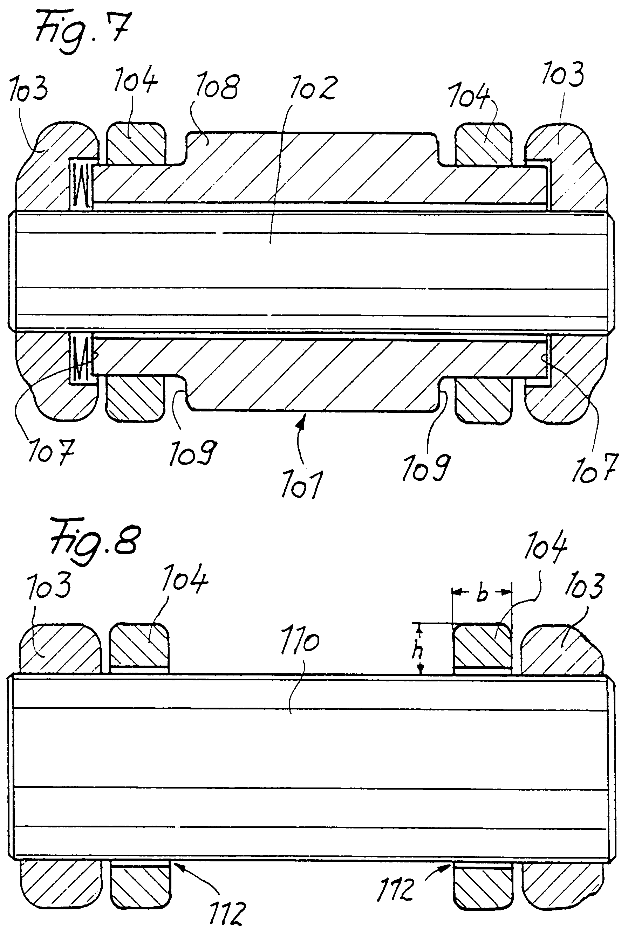

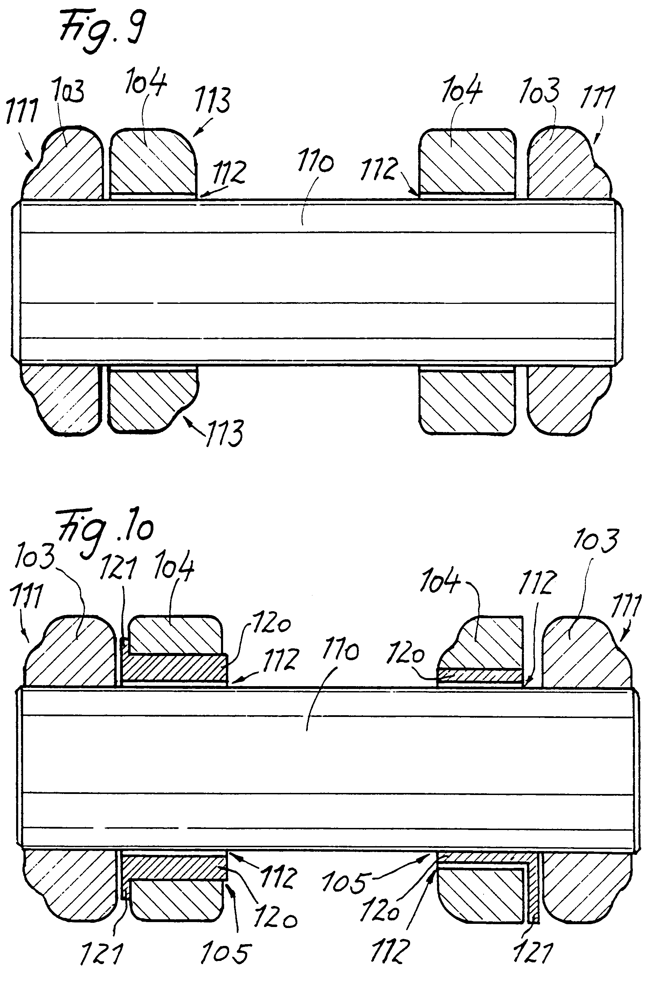

In sämtlichen Zeichnungsfiguren ist ein Kettengelenk einer Gleiskette für Kettenfahrzeuge gezeigt, das aus einer Kettenbuchse 1, Kettenbolzen 2 und Kettengliedern 3,4 besteht, wobei die innenliegenden Kettengliedenden der Kettenglieder 4 Lochungen aufweisen, die auf die Kettenbuchse 1 aufgepreßt sind, während die außenliegenden Kettengliedenden der Kettenglieder 3 ebenfalls gelocht sind und auf die die Buchse 1 überragenden Kettenbolzenenden des Kettenbolzens 2 aufgepreßt sind. Der Kettenbolzen 2 ist koaxial von der Kettenbuchse 1 umschlossen. Bei den Ausführungsformen gemäß Figur 1 bis 4 bestehen die Kettenglieder 3,4 und der Kettenbolzen 2 aus Stahl, während die Kettenbuchse 1 vorzugsweise aus Keramik-Keramik-Verbundwerkstoffen auf Basis von $Si_3N_4$ gefertigt ist. Bei der Ausführungsform gemäß Figur 5 ist auch der Kettenbolzen 2 aus derartigen Keramik-Keramik-Verbundwerkstoffen gefertigt.

Die Kettenbuchsen 1 unterliegen vorallem in zwei Bereichen erheblichem Verschleiß, nämlich in dem Bereich 5, der den Innenverschleiß zwischen Buchsen und Bolzen darstellt und im Bereich 6, also im Außenbereich der Buchse 1. Dieser Verschleiß wird sowohl bei ölgefüllten, als auch bei fettgeschmierten also auch bei trockenen Kettengelenken minimiert, sofern erfindungsgemäß die Kettenbuchse 1 aus den angegebenen Werkstoffen besteht. Der Verschleißvorteil durch den Einsatz der entsprechenden Kettenbuchse 1 ergibt sich bei geschmierten Ketten vorallem im Außenbereich 6, während bei trockenen Ketten gemäß beispielsweise Figur 4 sich eine Verschleißminderung sowohl im Innenbereich 5 als im Außenbereich 6 ergibt.

In den Bereichen 7 und 8 wird eine Preßpassung zwischen den innenliegenden Gliedern 4 und der Buchse 1 bzw. den außenliegenden Gliedern 3 und den Bolzen 2 erreicht, um die Gelenkausbildung zusammenzuhalten. Die Preßpassung zwischen den Kettengliedern 4 und der Buchse 1 im Falle aller Ausführungsformen und auch die Preßpassung zwischen Kettenglied 3 und Bolzen 2 bei der Ausführungsform gemäß Figur 5 ist bezüglich des notwendigen Toleranzfeldes der Bohrung (Buchsenauge des Kettengliedes) und des Toleranzfeldes des Außendurchmessers der Buchse bzw. des Bolzens so zu optimieren, daß sich aufgrund des niedrigeren Dehnungskoeffizienten der Buchsen bzw. Bolzen aus dem erfindungsgemäßen Material (im Verhältnis zu Stahl) im Verbund mit dem Material des Kettengliedes 3 bzw. 4 insgesamt eine Passung ergibt, die eine auf elastische Verformung zurückzuführende Pressung gewährleistet.

Mit dieser Ausbildung sind abgedichtete Ketten in bisher üblicher Art zu fertigen (vergleiche Figur 3) wobei bisher übliche sowie gegebenenfalls besondere, für die angegebenen Materialien geeignete Schmier- und Gleitmittel einschließlich hydrodynamischer Schmierstoffe in das Gelenk eingebracht werden können. Hierzu weist der Gelenkbolzen 2 ein axiales Sackloch 9 und Querkanal 10 auf, so daß Schmiermittel aus dem Sackloch 9 über den Hohlraum 10 in den Schmierspalt 11 eindringen kann. Die Abdichtung des Füllreservoirs des Bolzens 2 erfolgt beispielsweise durch einen elastischen Stopfen 12. Die äußere Abdichtung erfolgt durch eine Dichtung 13 und einen Stützring 14 oder eine Dichtung 13 und einen angeformten Stützbereich 15, wie aus Figur 3 links ersichtlich.

Die Abdichtung kann auch durch einen an die Buchse 1 angeformten Gleitring 16 und einem aus gleichem Material bestehenden Gegenstück 17 bestehen, welches durch eine gummielastische Dichtung 18 axial auf Vorspannung gehalten wird. Dies ist in Figur 3 rechts dargestellt. Bei fettgeschmierten Ketten kann das Gelenk aus einem Bolzen 2 aus Vollmaterial und Dichtungen zwischen Kettenglied 3 und Buchse 1 bestehen, wobei eine ähnliche Konfiguration wie in Figur 3 benutzt werden kann, allerdings der Bolzen als Vollbolzen ausgebildet ist.

Bei üblichen trocken abgedichteten Kettengelenken, wie dies beispielsweise in Figur 4 dargestellt ist, ist als Quasiabdichtung axial die Anordnung von Tellerfedern 19 zwischen der Stirnfläche der Buchse 1 und dem Kettenglied 3 vorgesehen.

Bei trockenen Ketten ohne jeglicher Abdichtung (vergleiche Figur 4 und 5 rechts) ist eine besonders einfache Aufbauart der Gelenkverbindung ermöglicht, wobei durch den Einsatz der angegebenen Materialien dennoch ein günstiges Veschleißverhalten erreicht wird.

Bei der Ausführungsform gemäß Figur 5 besteht auch der Bolzen 2 aus dem oben angegebenen Material, aus welchem die Buchse 1 erfindungsgemäß besteht.

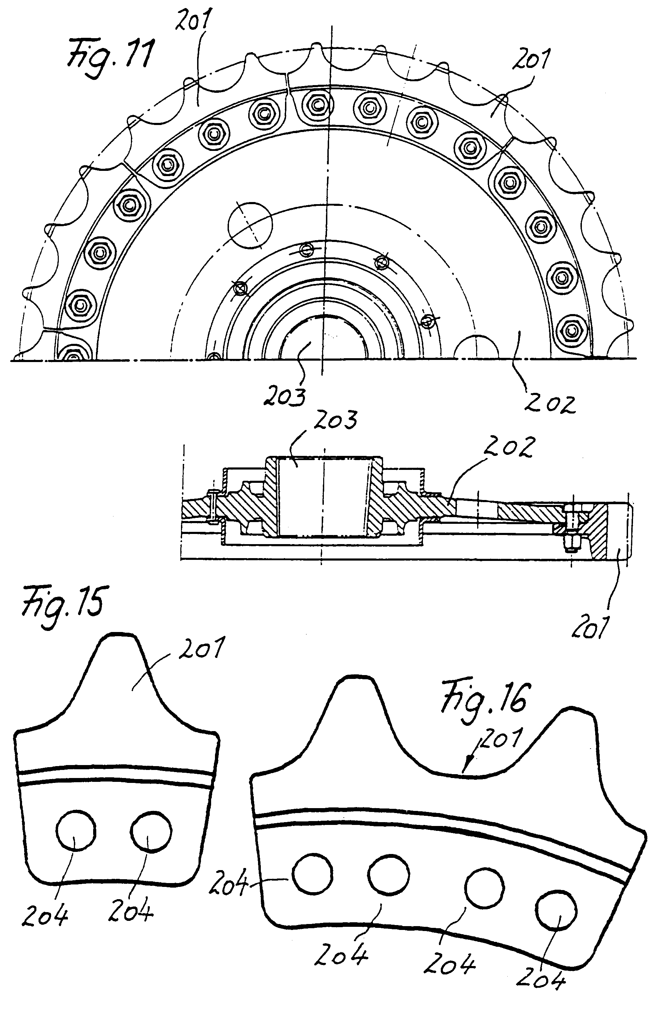

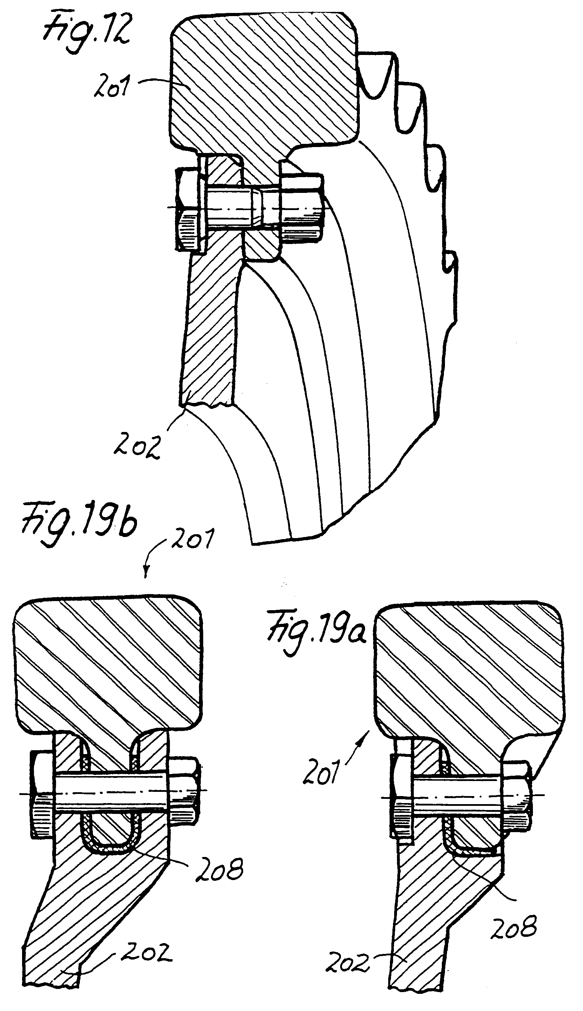

In den Zeichnungsfiguren 6 bis 10 ist das Kettengelenk einer Gleiskette für Kettenfahrzeuge gezeigt, die aus einer Kettenbuchse 101, einem Kettenbolzen 102 und Kettengliedern 103,104 besteht, wobei die innenliegenden Kettengliedenden der Kettenglieder 104 Lochungen aufweisen und gemäß Ausführungsform Figur 6 und 7 auf die Kettenbuchse 101 aufgepreßt sind, während die außenliegenden Kettengliedenden der Kettenglieder 103 zwar ebenfalls gelocht sind, aber auf die die Buchse 101 überragenden Kettenbolzenenden des Kettenbolzens 102 aufgepreßt sind (Ausführungsform Figur 6 und 7).

Bei der Ausführungsform gemäß Figur 6 sind die Oberflächen (innen 105 und außen 106) sowie Stirnflächen 107 der Buchsen 101 entsprechend den Anforderungen bezüglich der im Patentanspruch genannten Materialien bezüglich des Verschleißverhaltens und der Realisierung einer Preßpassung entsprechend ausgebildet und mechanisch bearbeitet. Insbesondere im Zahneingriffsbereich sowie ggf. innerhalb der Bohrung sowie an den anderen Stirnflächen ist die Buchse aber vorzugsweise unbearbeitet.

Bei der Ausführungsform nach Figur 7 ist die Buchse 101 als Zapfenbuchse ausgebildet, wobei ein Zapfen 108 an der Buchse 101 ausgebildet ist. Der Zapfen 108 ist konstruktiv so ausgelegt, daß unter Berücksichtigung der Ausführung des Antriebs- und Leitrades eines Kettenantriebes bzw. an der Kettenführung der Durchmesser der Buchse den festigkeitsoptimalen Anforderungen bezüglich des Einsatzes der im Hauptanspruch angegebenen Materialien entspricht. Bezüglich der Anforderungen der erfindungsgemäß zur Anwendung kommenden Herstellungsverfahren und der entsprechenden Materialien sind die Radien 109 im Übergangsbereich zwischen dem Preßbereich der Buchse 101 und dem Zapfen 108 so ausgeführt, daß eine optimale Festigkeitsgeometrie erreicht wird. Vorzugsweise ist der Radius in diesem Bereich mit 3 bis 8 mm realisiert.

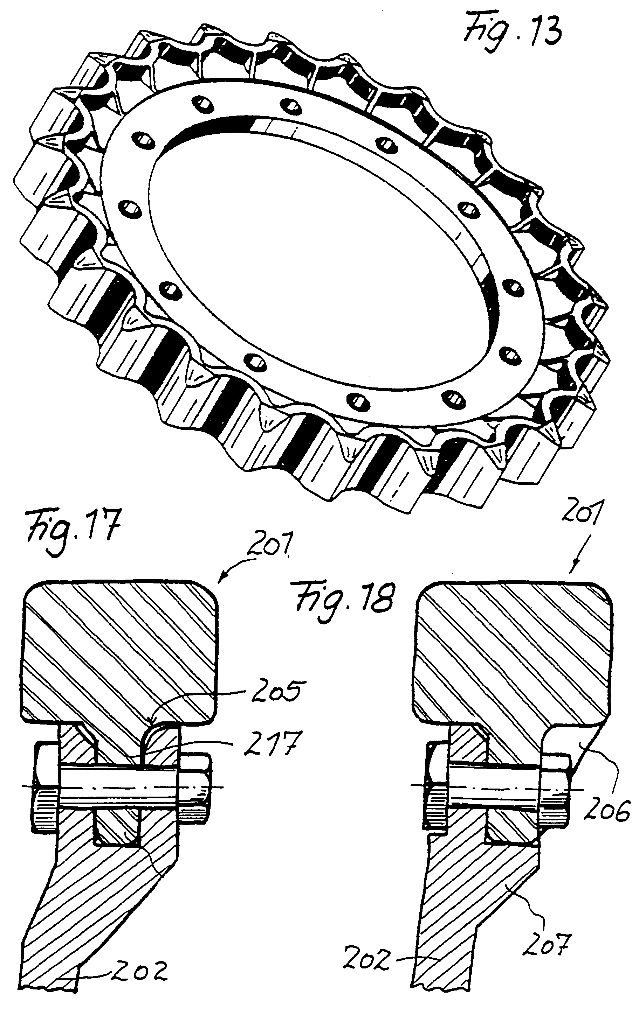

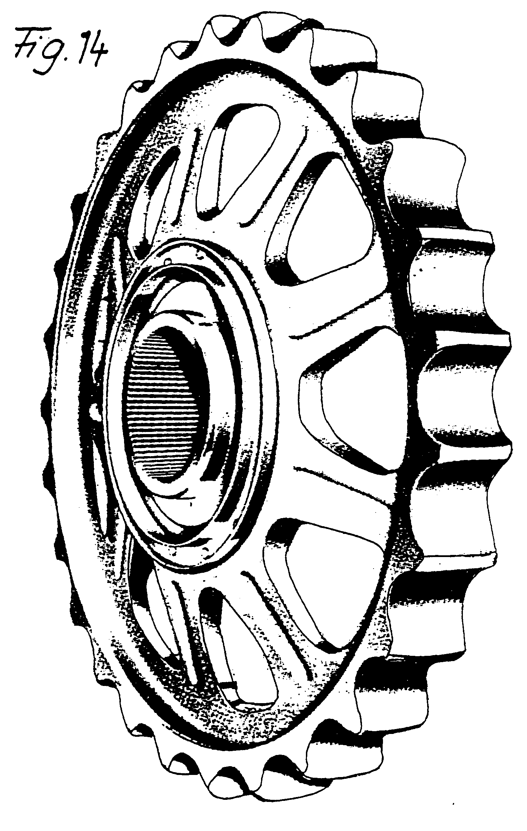

Bei den Ausführungsformen gemäß Figur 8 bis 10 ist das Gelenk der Kette so ausgeführt, daß quasi der Bolzen und die Buchse zu einem Kompaktbolzen 110 vereinigt sind. Dieser Kompaktbolzen 110 kann aus Stahl bestehen, vorzugsweise besteht er aber aus den Materialien, die im Hauptanspruch genannt sind. Die Scharnierung wird durch eine Spielpassung zwischen dem Auge des im Gelenkverbund innenliegenden Gliedes 104 und dem Kompaktbolzen 110 ermöglicht. Die Preßpassung zwischen dem Auge des im Gelenkverbund außenliegenden Kettengliedes 103 und dem Kompaktbolzen 110 ist so ausgeführt, daß die Durchmesserverhältnisse den sich aus dem Einsatz der erfindungsgemäßen Materialien ergebenden Forderungen für die Realisierung der Preßpassung entsprechen und der Durchmesser des Gesamtbolzens aus den Festigkeitsanforderungen für den Einsatz der Materialien gemäß Hauptanspruch in gattungsgemäßer Art abgeleitet wird. Die Kontur 111 des außenliegenden Gliedes 103 ist insbesondere zur Realisierung der Preßpassung so gewählt, daß sich unter Berücksichtigung der Bedingungen, die durch das Material an die Preßpassung gestellt werden, eine optimale Konturgeometrie ergibt und zwischen dem Auge des Gliedes 103 und dem Kompaktbolzen 110 eine Flächenpressung erzeugt wird, die das reibschlüssige Übertragen von Längskräften und Drehmomenten ohne zusätzliche Sicherung gegen Verschieben und Verdrehen ermöglicht.

Die Dimensionierung der Spielpassung 112 zwischen dem Auge des innenliegenden Gliedes 104 und dem Kompaktbolzen 110 ist so gewählt, daß eine Scharnierbarkeit leicht möglich ist, gleichzeitig aber der Materialring des Gliedauges im Durchmesser, also bezogen auf seine Höhe h den Festigkeitsanforderungen an die Kette entspricht und in seiner Breite b so ausgeführt ist, daß bereits durch den Einsatz der Materialien gemäß Hauptanspruch der Anmeldung bzw. durch spezielle Bearbeitung der Verschleiß zwischen Gliedauge 104 und Kompaktbolzen 110 so optimiert ist, daß dieser Verschleiß nicht größer ist als der Verschleiß zwischen Antriebsradzahn und Kompaktbolzen 110 bezogen auf eine hinreichende Festigkeit des Kompaktbolzens für den gattungsgemäßen Einsatz.

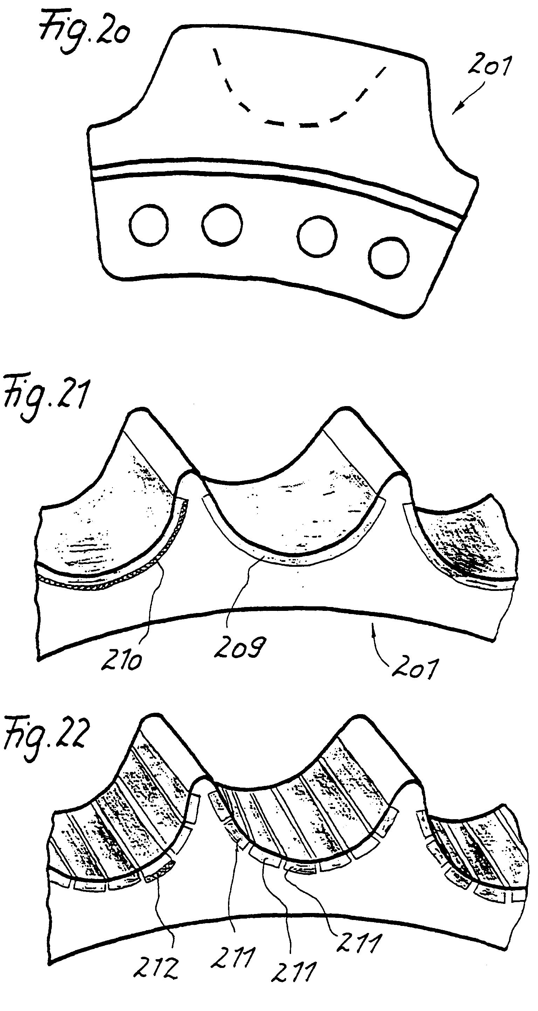

Auch die Kontur des innenliegenden Kettengliedes 104 kann verschleißoptimal und materialoptimal ausgebildet sein. Beim Ausführungsbeispiel gemäß Figur 10 ist der Kompaktbolzen 110 aus Metall oder vorzugsweise Keramik ausgebildet.

Es ist ein Ring 120 zwischen das Auge des innenliegenden Gliedes 104 und den Kompaktbolzen 110 angeordnet, wobei entweder eine Preßpassung zwischen dem Gliedauge des innenliegenden Gliedes 104 und dem Ring 120 erzeugt ist, wie das in Figur 10 links und rechts oben gezeigt ist, oder aber eine Preßpassung zwischen dem Kompaktbolzen 110 und dem Ring 120 erzeugt ist, wie das in Zeichnungsfigur 10 rechts unten gezeigt ist. Zusätzlich kann der Ring auch einen Bund 121 aufweisen, wie in Figur 10 gezeigt. Der Bund dient als Abstandssicherung für den Scharnierspalt als Montagehilfe und als Verschleißminderungselement zur Minderung des Verschleißes zwischen den benachbarten Gliedaugen.

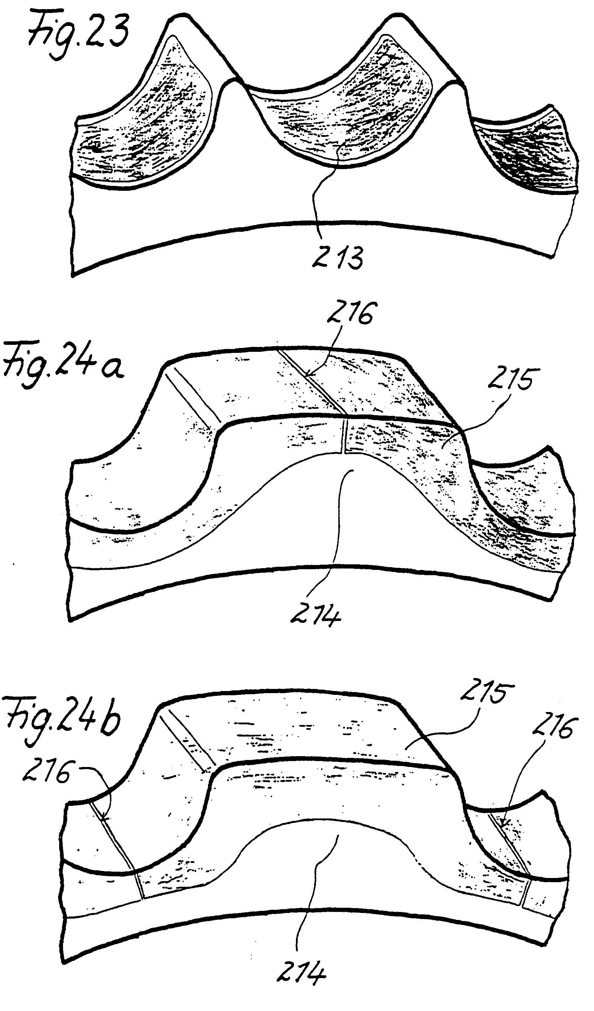

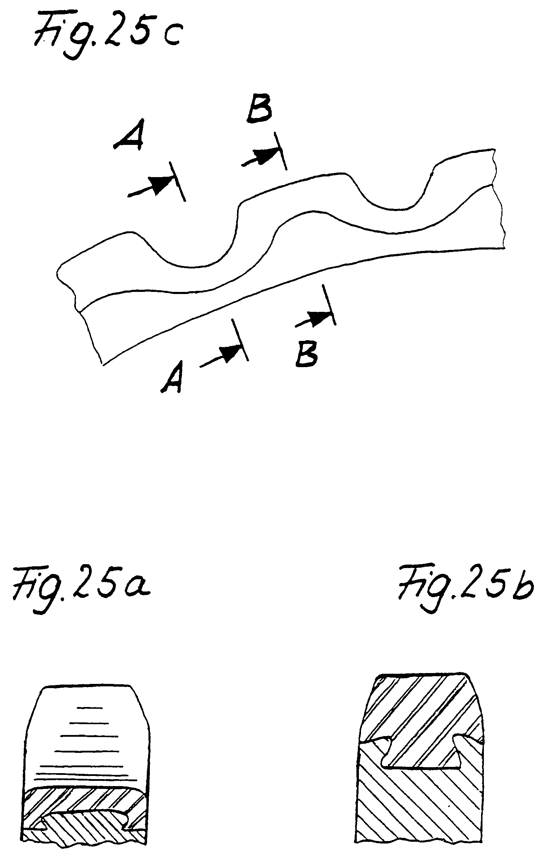

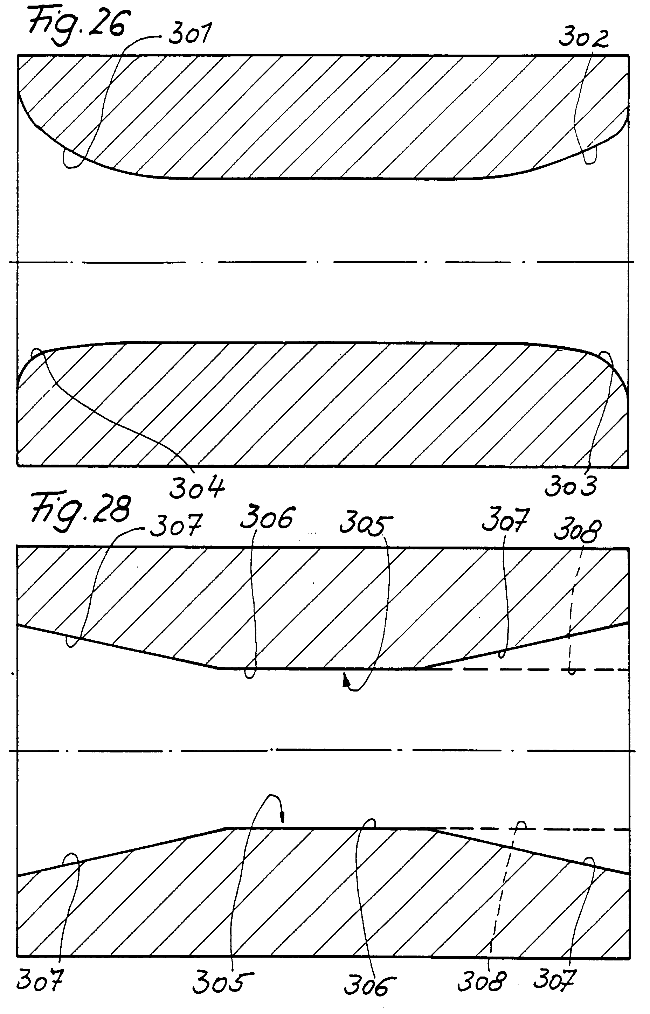

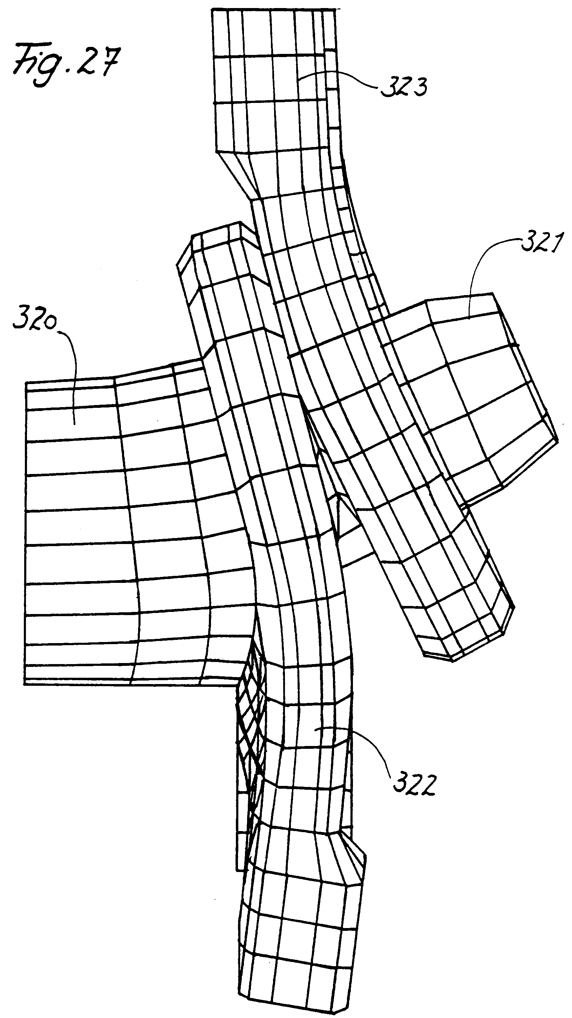

Bei der Ausführungsform gemäß Figur 11, die an sich der bisher üblichen Ausbildung entspricht, sind die Antriebsradsegmente 201 auf einer Antriebsradgrundscheibe 202, die mit der Getriebe- bzw. Antriebswelle in Verbindung gebracht wird (bei 203) aufgeschraubt. Es ist auch möglich komplette Antriebsradkränze 201 auf einer Antriebsradgrundscheibe 202 aufzubringen und an dieser mittels Schrauben zu befestigen. Ein solcher Antriebsradkranz ist in Figur 13 gezeigt. Es sind auch Ausführungsformen möglich, bei denen die gesamten Antriebsräder einstückig ausgebildet sind, wie dies in Figur 14 gezeigt ist. Bei sämtlichen Ausführungsformen ist die erfindungsgemäße Materialauswahl und Ausbildung vorteihaft. Um die einzelnen Bestandteile des Antriebes besonders auf die erfindungsgemäß bevorzugten Materialien konstruktiv abzustellen, sind konstruktive Änderungen bevorzugt und zur Verbesserung der Brauchbarkeit sinnvoll. Hierzu ist beispielsweise in Figur 15 ein Antriebsradsegment 201 gezeigt, welches entgegen den im Stand der Technik üblichen Ausführungsformen nur einen einzigen Zahn aufweist. An diesem einen Zahnsegment befinden sich zwei Bohrungen 204 zur Befestigung des Segmentes an einer Antriebsradgrundscheibe 202.

Das Antriebsradsegment 201 kann auch, wie dies in Figur 16 dargestellt ist, zwei Zähne oder auch drei Zähne aufweisen, wobei jedem Zahn zwei Befestigungslochungen 204 zugeordnet sind, die relativ zum Segment radial innenliegen.

In Figur 17 ist beispielsweise ein Antriebsradsegmen 201 mit einem mittigen Verbindungszapfen 217 gezeigt. Bei dieser Ausführungsform ist eine bevorzugte, gegenüber herkömmlichen Antriebsradsegmenten modifizierte Gestalt der Verbindungsausführung vorgesehen, nämlich in Form eines mittigen Verbindungszapfens 217 am jeweiligen Antriebsradsegment 201. Hierdurch wird eine Erhöhung der Festigkeit erreicht. Vorzugsweise sind Ausrundungen 205 in einem vorzugsweisen Radius von 3 bis 8 mm bei den Übergängen von Zahn zu Verbindungszapfen 217 aus werkstoffspezifischen Gründen vorteilhaft. Auch ist bevorzugt, die umgekehrte geometrische Form am Verbindungselement der Antriebsradgrundscheibe 202 zu realisieren.

Um den werkstoffspezifischen Anforderungen gerecht zu werden, sind zudem an den Zahnsegmenten 201 Zahnverstärkungen 206 vorzusehen, wie dies aus Figur 18 beispielsweise ersichtlich ist. Auch eine besondere konstruktive Auslegung des Verbindungselementes an der Antriebsradgrundscheibe 202 (z.B. Flanschscheibe, Anschraubkranz oder Anschweißring) ist vorgesehen. Zur Festigkeit des Antriebsradsegmentes 201 aus den erfindungsgemäßen Materialien trägt eine konstruktive Besonderheit der Antriebsradgrundscheibe 202 Rechnung, indem dort Verstärkungen 207 eingebracht sind, die die Festigkeit des Antriebssegmentes 201 gewährleisten und stützen. Bei weiteren Ausführungsformen, beispielsweise der Ausführungsform gemäß Figur 19a und b ist eine weitere Besonderheit vorgesehen. Um Stoßbelastungen zu dämpfen ist direkt in der Verbindung zwischen dem Antriebsradsegement 201 und der Antriebsradgrundscheibe 202 eine duktile Zwischenschicht 208 eingebracht, die direkt auf das Antriebsradsegment 201 bzw. die Antriebsradgrundscheibe 202 aufgebracht ist und aus den erfindungsgemäßen Werkstoffen mit modifizierter Zusammensetzung besteht, aber auch aus anderen duktilen Werkstoffen bestehen kann. Die duktile Zwischenschicht kann auch als Zwischenscheibe, d.h. nicht direkt auf das Antriebssegment oder Antriebsradgrundscheibe aufgetragen, bestehen.

Bei der Ausführungsform gemäß Figur 20 ist der eigentliche Zahn des Zahnsegmentes 201 verbreitert, so daß der Zahn praktisch eine Breite auffaßt, die zwei Zähnen der bisher üblichen Bauart und Ausführungsform entspricht. Diese Ausbildung ist aufgrund der erfindungsgemäßen Werkstoffauswahl bevorzugt und nützlich.

Der Einsatz des erfindungsgemäßen Materials in die Zähne der Zahnsegmente 201 kann auch in anderer Weise erfolgen. Dies ist anhand der folgenden Figuren näher erläutert. Es ist dort der Zahn aus einem Stahl- bzw. Gußgrundkörper des Antriebsradsegmentes 201 gebildet. Bei der Ausführungsform gemäß Figur 21 ist ein Zahnmuldeneinsatz vorgesehen. Dabei ist in die Zahnmulde des Antriebskranzes bzw. des Antriebssegmentes 201 eine Schale 209 aus den erfindungsgemäß bevorzugten Werkstoffen vorgesehen, vorzugsweise durch Eingießen, Löten, Einkleben oder ähnliche Verfahren eingesetzt und fixiert. Gegebenenfalls kann zwischen der Schale 209 und dem Grundkörper der Zahnmulde eine duktile Zwischenschicht 210 ausgebildet sein. Die Schale 209 kann bis an die Stirnflächen des Zahnes reichen oder auch vorher enden. Sie kann auch seitlich von Metall umgeben sein. Bei der Ausführungsform gemäß Figur 22 ist der Zahnmuldeneinsatz mehrteilig ausgebildet. Grundlage ist ein ähnliches oder gleiches Herstellungsprinzip wie bei dem einteiligen Keramikeinsatz gemäß Figur 21. Es sind jedoch mehrteilige Materialeinsätze 211 in der Zahnmulde, vorzugsweise in Form von Streifen, die quer zum Antriebsradzahn angeordnet sind und mit oder ohne duktile Zwischenschicht 212 ausgebildet sind, vorgesehen.

Durch diese Ausbildungsvariante wird die Ausbildung von sehr kompakten Körpern aus den genannten erfinungsgemaßen Werkstoffen vermieden und damit deren Bruchgefahr gesenkt, da die Streifen mehr oder weniger unabhängig voneinander belastet werden.

Bei der Ausführungsform gemäß Figur 23 ist die Zahnmulde mit den genannten und bevorzugten Werkstoffen beschichtet, vorzugsweise durch termische Spitzen. Hierfür ist in der Zahnmulde ein Bett ausgeformt, daß die Schicht aufnimmt. Die Schicht 213 kann aus mehreren Teilschichten bestehen, deren Duktilität nach radial innen zunimmt, um der Bruchgefahr bei hohen Belastungen entgegenzuwirken. Eine weitere Variante ist in den Figuren 24a und 24b gezeigt. Dabei besteht das Antriebsradsegment aus Stahl, Guß oder auch aus den erfindungsgemäß bevorzugten Werkstoffen. Es wird in der Weise hergestellt, daß eine Art Zahnstumpf 214 ausgeformt wird und über diesen eine Kappe 215 aus den erfindungsgemäß bevorzugten Werkstoffen gesetzt wird. Aus Festigkeitsgründen kann die Zahnlücke des Antriebsrades bezüglich des Antriebsradsegmentes nicht mit den genannten Werkstoffen ausgefüllt werden. Die Verbindung zwischen Zahnkappe 215 und Zahnstumpf 214 erfolgt durch Angießen, Einkleben, Löten oder ähnliche Verfahren. Die Teilung 216 der Zahnkappe 215 liegt in der Zahnspitze (Figur 24a) oder vorzugsweise im Zahngrund (24b), da in diesem Falle zusätzlich zu den Zahnflanken auch die Zahnstirnflächen sehr verschleißbeständig sind.

Eine weitere Variante ist in Figur 25a bis c gezeigt. Dort ist eine spezielle Ausformung der Elemente vorgesehen, die das Angießen der Zahnkappen oder dergleichen aus den genannten Werkstoffen an das Antriebssradsegment bzw. die Antriebsräder verbessert und erleichtert. Die Querschnittsgeometrie im Anschlußbereich ist etwa schwalbenschwanzartig ausgebildet. Bei der Fertigung werden diese Formelemente entweder an das aus den genannten Werkstoffen bestehende Zahnteil angeformt und beim Gießen des Antriebsradsegmentes bzw. des Antriebsrades vom Gießgut umschlossen (Figur 25b) oder es wird das Negativ des Formteiles in das aus den genannten Werkstoffen bestehende Zahnteil eingearbeitet und vom Gießgut ausgefüllt (Figur 25a). Letzteres hat den Vorteil, daß die geometrisch speziell geformte Verbindung durch das umgreifende verschleißfeste Teil aus den genannten Werkstoffen gegen seitlich auftretendem Verschleiß geschützt wird. In Figur 25c sind die Schnittstellen A und B bezüglich der Schnittdarstellungen Figur 25a und 25b gezeigt.

In Figur 26 ist eine Kettenbuchse im Schnitt gezeigt, wobei im Innenbereich der Buchse, das heißt im Gelenkbereich der äußeren Bolzenkontur des in der Buchse sitzenden Bolzens und der inneren Buchsenkontur (Buchseninnenmantel) eine solche konstruktive Auslegung erfolgt ist, daß die Innenkontur der Buchse gemäß Figur 26 sich der Bolzenkontur annähert, die sich bei Belastung der Ketten durch Biegung des Bolzens ergibt, wie dies in Figur 27 gezeigt ist.

Dabei ist der Innenbereich der Buchse bezogen auf die Ausläufer der Innenkontur oder auch bezogen auf den Bereich von der Buchsenmitte bis zu den Buchsenstirnseiten einer im wesentlichen stetigen nicht linearen Funktion, vorzugsweise der durch die Biegelinie des Bolzens vorgegebenen Funktion angenähert, wobei die Kontur eine logarithmische Funktion (bei 1 in Figur 26), eine Potenzfunktion (bei 3 in Figur 26), eine Expotentialfunktion (bei 4 in Figur 26) oder auch eine Korbbogenform haben kann, wie bei 2 in Figur 26 gezeigt, wobei dort ein flacherer Radius R1 in einen stärker gekrümmten Radius R2 an der Buchsenstirnseite übergeht. In Figur 28 ist eine im Stand der Technik bekannte Buchse aus Stahl gezeigt, wobei die Innenkontur 305 der Buchse so ausgeführt ist, daß eine Abknickung von dem ursprünglich geraden Bereich 306 erfolgt und diese Abknickung selbst auch wieder als Gerade 307 ausläuft. Beim Aufpressen der Glieder ergibt sich wiederum eine im wesentlichen gerade Innenkontur durch die nach innen übertragenen Wirkungen der Preßpassung, was durch die gestrichelte Gerade 308 in Figur 28 angedeutet ist.

In Figur 27 ist die Gelenkstelle einer Gleiskette gezeigt, wobei mit 320 die Kettenbuchse, mit 321 der Kettenbolzen, mit 322 das innere Kettenglied und mit 323 das äußere Kettenglied bezeichnet ist. In dieser Zeichnungsfigur ist schematisch das Biegeverhalten der miteinander in Eingriff stehenden Teile gezeigt.

Die Erfindung ist nicht auf die Ausführungsbeispiele beschränkt sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Gleiskette für Kettenfahrzeuge, insbesondere kettengetriebene Baufahrzeuge, bestehend aus Kettenbuchsen, Kettenbolzen und Kettengliedern aus Stahl, wobei die innenliegenden Kettengliedenden auf die Kettenbuchse aufgepreßt sind, die außenliegenden Kettengliedenden auf die die Buchse überragenden Kettenbolzenenden aufgepreßt sind und die Kettenbuchse von dem Kettenbolzen durchgriffen ist, **dadurch gekennzeichnet,** daß die Kettenbuchse (1) aus Verbundfaserwerkstoffen, Ingenieurkeramiken und aus Keramik-Keramik-Verbundwerkstoffen auf Basis von $Si_3N_4$ (Siliziumnitrit) mit weniger als 15 Gewichtsprozent Sinteradditiv besteht.

2. Gleiskette nach Anspruch 1, **dadurch gekennzeichnet,** daß die Preßpassung zwischen Kettenglied (4) und Kettenbuchse (1) bezüglich eines erforderlichen Toleranzfeldes der das Buchsenauge bildenden Bohrung des Kettengliedes (4) und eines Toleranzfeldes des Außendurchmessers der Kettenbuchse (1) so eingestellt ist, daß sich aufgrund des niedrigeren Dehnungskoeffizienten der Kettenbuchsen (1) im Verhältnis zu Stahl im Preßverbund mit dem Stahlmaterial des Kercengliedes (4) eine Passung ergibt, die eine auf elastische Verformung zurückzuführende Pressung gewährleistet.

3. Gleiskette nach Anspruch 1 oder 2, wobei die Gleiskette Kettenbolzen mit axialer Sacklochausnehmung und radialer Querausnehmung aufweisen, die mit öl- oder fettartigem Schmiermittel gefüllt und deren axiale Sacklochausnehmung an ihrem offenen Ende mittels geeigneter Verschlußmittel verschließbar ist, zwischen Kettenbolzen und Kettenbuchse ein Schmierspalt ausgebildet ist, der axial außen durch Dichtmittel geschlossen ist, die zwischen der Stirnseite der Kettenbuchse und der Korrespondenzfläche des äußeren Kettengliedes angeordnet sind, **dadurch gekennzeichnet,** daß die Dichtmittel durch

a) eine elastische Dichtung (13) (Dichtring) und einen zu diesem radial innenliegenden Stützring (14) vorzugsweise aus dem Material gemäß Kennzeichenteil des Anspruches 1 gebildet sind, wobei der Stützring (14) ein separates Teil ist oder an die Stirnseiten der Kettenbuchsen angeformt ist (Anformung 15),

b) einen durch die Buchsenstirnseite gebildeten, an diese angeformten Gleitring (16) und eine aus gleichem Material bestehende Gleitringdichtung (17) mit elastischem Federmittel (18) gebildet sind, die durch das Federmittel (18), welches sich axial gegenüber der Buchsenstirnfläche an Teilen des äußeren Kettengliedes (3) abstützt, gegen den Gleitring (16) auf Anlage gepreßt ist.

4. Gleiskette nach einem der Ansprüche 1 bis 3 **dadurch gekennzeichnet,** daß der Kettenbolzen (2) aus dem Material gemäß Kennzeichenteil des Anspruches 1 besteht.

5. Gleiskette nach Anspruch 4, **dadurch gekennzeichnet,** daß die Preßpassung zwischen Kettenbolzen (2) und Kettenglied (3) gemäß Anspruch 2 ausgeführt ist.

6. Gleiskette für Kettenfahrzeuge nach einem der Ansprüche 1 bis 5, **dadurch gekennkzeichnet,** daß die Kettenbuchse (101) aus Hartmetall, Faserverbundwerkstoffen, Keramik-Keramik-Verbundwerkstoffen und/oder Ingenieurkeramiken auf Basis $Si_3N_4$ (Siliziumnitrit) mit weniger als 15 Gewichtsprozent Sinteradditiv, einem Bruchwachstum im unterkritischen Bereich, einer Bruchzähigkeit kleiner 20 MPa $\sqrt{m}$ und hoher Homogenität des Werkstoffes bei Realisierung eines Weibull-Modules von größer als 10, vorzugsweise größer als 20, besteht.

7. Gleiskette nach einem der Ansprüche 1 bis 6, **dadurch gekennzeichnet,** daß die Oberflächen (innen 105 und außen 106) sowie Stirnflächen (107) der Buchsen (101) entsprechend den Anforderungen, die an die im Anspruch 1 bzw. 6 genannten Materialien bezüglich des Verschleißverhaltens und der Realisierung einer Preßpassung gestellt sind, mechanisch bearbeitet sind, vorzugsweise im Zahneingriffsbereich, ggf. in der Bohrung sowie den Stirnflächen aber unbearbeitet sind, d.h. insbesondere diese Oberflächen einer in den technisch üblichen Verfahren des Pressens, Heißpressens, Sinterpressens, Sinterns, Gasdrucksinterns o.ä. Technologien von Materialien gemäß Anspruch 1 oder 6 entstehenden Oberflächenrauheiten (ohne weitere Bearbeitung) entsprechen und gemäß den Anforderungen dieser Herstellungsverfahren bzw. der entsprechenden Materialien toleriert sind.

8.  Gleiskette nach einem der vorhergehenden Ansprüche,
    **dadurch gekennzeichnet,** daß die Buchse als Zapfenbuchse ausgebildet ist, wobei der Zapfen (108) konstruktiv so ausgelegt ist, daß unter Berücksichtigung der Ausführung des Antriebs- und Leitrades eines Kettenantriebes bzw. einer Kettenführung der Durchmesser der Buchse den festigkeitsoptimalen Anforderungen bezüglich des Einsatzes von Materialien gemäß Anspruch 1 oder 6 entspricht, die Oberflächenrauheit der Buchse im Zapfen- bzw. Zahneingriffsbereich der bisher üblichen Ausführungsform entspricht, vorzugsweise aber der einer gepreßten, heißgepreßten, sintergepreßten, gesinterten bzw. gasdruckgesinterten für die Materialien gemäß Anspruch 1 oder 6 nach ähnlichen Technologien hergestellten entspricht und zwar ohne weitere Bearbeitung und gemäß den Anforderungen dieser Herstellungsverfahren bzw. der entsprechenden Materialien toleriert ist, wobei die Radien (109) im Übergangsbereich zwischen Preßbereich der Buchse (101) und Zapfen (108) so ausgeführt sind, daß eine entsprechend den Forderungen der Materialien nach Anspruch 1 oder 6 optimale Festigkeitsgeometrie erreicht wird, vorzugsweise der Radius R= 3 mm bis 8 mm realisiert ist.

9.  Gleiskette nach einem der vorhergehenden Ansprüche,
    **dadurch gekennzeichnet,** daß das Gelenk der Kette so ausgeführt ist, daß Buchse und Bolzen bei den bisher üblichen Ausführungen zu einem Teil, nämlich einem Kompaktbolzen (110), bestehend aus Stahl, vorzugsweise aber aus Materialien gemäß Anspruch 1 oder 6 vereinigt sind und die Scharnierung durch eine Spielpassung zwischen dem Auge des im Gelenkverbund innenliegenden Kettengliedes (104) und dem Kompaktbolzen (110) ermöglicht ist.

10. Gleiskette nach Anspruch 9,
    **dadurch gekennzeichnet,** daß die Preßpassung zwischen dem Auge des im Gelenkverbund außenliegenden Gliedes (103) und dem Kompaktbolzen (110) so ausgeführt ist, daß die Durchmesserverhältnisse den sich aus dem Einsatz der Materialien nach Anspruch 1 oder 6 ergebenden Forderungen für die Realisierung der Preßpassung entsprechen und der Durchmesser des Gesamtbolzens (110) aus den Festigkeitsanforderungen für den Einsatz der Materialien nach Anspruch 1 oder 6 in Ketten gattungsgemäßer Art abgeleitet ist.

11. Gleiskette nach einem der beiden vorhergehenden Ansprüche,
    **dadurch gekennzeichnet,** daß die Kontur des außenliegenden Kettengliedes zur Realisierung der Preßpassung so gewählt ist, daß sich unter Berücksichtigung der Bedingungen, die durch das Material an die Preßpassung gestellt sind, eine optimale Konturgeometrie ergibt und zwischen dem Auge des Gliedes (103) und dem Kompaktbolzen (110) eine Flächenpressung erzeugt ist, die das reibschlüssige Übertragen von Längskräften und Drehmomenten ohne zusätzliche Sicherung gegen Verschieben und Verdrehen gewährleistet.

12. Gleiskette nach einem der drei vorhergehenden Ansprüche,
    **dadurch gekennzeichnet,** daß die Dimensionierung der Spielpassung (112) zwischen dem Auge des innenliegenden Gliedes und dem Kompaktbolzen (110) so gewählt ist, daß eine Scharnierbarkeit leicht ermöglicht ist, gleichzeitig aber der Materialring des Gliedauges im Durchmesser, also bezogen auf seine Höhe (h) den Festigkeitsanforderungen an die Kette entspricht und in seiner Breite (b) so ausgeführt ist, daß bereits durch den Einsatz der Materialien gemäß Anspruch 1 oder 6 bzw. durch spezielle Bearbeitungen (Spezialschleifen, Polieren, Läppen) der Verschleiß zwischen Gliedauge (104) und Kompaktbolzen (110) so optimiert ist, daß dieser Verschleiß nicht größer ist als der Verschleiß zwischen Antriebsradzahn und Kompaktbolzen (110), bezogen auf eine hinreichende Festigkeit des Kompaktbolzens (110) für den entsprechenden Einsatz.

13. Gleiskette nach einem der vorhergehenden Ansprüche,
    **dadurch gekennzeichnet,** daß der Kompaktbolzen (110) aus Metall oder vorzugsweise einem der Materialien gemäß Anspruch 1 oder 6 besteht, daß zwischen dem Auge des innenliegenden Gliedes (104) und dem Kompaktbolzen (110) ein Ringelement aus Metall oder vorzugsweise dem Material gemäß Anspruch 1 oder 6, der dann allerdings mit erheblich größerer Dicke angeordnet ist, wobei eine Preßpassung zwischen dem Auge des innenliegenden Kettengliedes (104) und dem Ringteil ausgebildet ist, während das Ringteil mit Spielpassung zum Kompaktbolzen (110) angeordnet ist oder aber, daß eine Preßpassung zwischen dem Ring und dem Kompaktbolzen (110) erzeugt ist, während das Auge des innenliegenden Gliedes mit Spiel dazu angeordnet ist.

14. Gleiskette nach dem vorhergehenden Anspruch,
    **dadurch gekennzeichnet,** daß an dem Ring ein Bund angeformt ist, der sich in den Spalt zwischen dem Auge des innenliegenden Gliedes (104) und dem Auge des äußeren Kettengliedes (103) erstreckt und als Abstandssicherung für den Scharnierspalt dient, wobei durch den Bund gleichzeitig eine Verschleißminderung zwischen den einander benachbarten Flächen der Gliedaugen gebildet ist.

15. Antriebsrad oder Antriebsradgrundscheibe mit Antriebsradsegmenten für den Antrieb von Gleisketten, Förderketten und ähnlichen Antriebssystemen, **dadurch gekennzeichnet,** daß das gesamte Antriebsradsegment oder die Zähne des Segmentes oder Teile der Zähne des Segmentes aus Faserverbundwerkstoffen, Keramik-Keramik-Verbundwerkstoffen und Ingenieurkeramiken bzw. Hochleistungskeramiken aus verschleißbeständigen Eisenbasis-Sinterwerkstoffen mit besonders vorzugsweise verschleißreduzierender Schutzschicht und einem Ausgangpulver aus Ferrochrom und Eisen als Matrixmaterialien und Borcarbid als Hartstoffphase bwz. aus Zirkonoxiden oder auf der Basis nichtoxidischer Keramik, wie z.B. $Si_3N_4$ (Siliziumnitrit), mit weniger als 15 Gewichtsprozent Sinteradditiv besteht, das Rißwachstum im Werkstoff während der gesamten Betriebsdauer im unterkritischen Bereich liegt, die Bruchzähigkeit $K_{Ic}$ einen Wert von vorzugsweise 5 MPa $\sqrt{m}$ nicht unterschreitet und die Festigkeit und Zähigkeit durch Verwendung und Dosierung geeigneter Additive auf einen definierten Wert eingestellt wird, wobei besonders die Homogenität des Werkstoffes gesichert ist und die Streuung der Werkstoffkennwerte, insbesondere der Festigkeit, durch den Weibull-Modul m von größer als 10, vorzugsweise größer 20, festgelegt ist.

16. Antriebsradsegment nach Anspruch 15, **dadurch gekennzeichnet,** daß das Segment maximal ein bis drei Zähne aufweist, die Verbindupgsbohrungen des Segmentes in ihrer Anzahl so modifiziert werden, daß eine hinreichende Festigkeit der Verbindung zwischen Antriebsradgrundscheibe und Antriebsradsegment entsprechend der speziellen Werkstoffeigenschaft der Werkstoffe gemäß Anspruch 15 erreicht wird und die Verbindungszapfen am Antriebsradsegment so ausgebildet sind, daß eine Verbindung (z.B. Verschraubung) mit der Antriebsradgrundscheibe unter Berücksichtigung der speziellen Festigkeitseigenschaften der Werkstoffe nach Anspruch 15 möglich wird und daß vorzugsweise der Übergang vom Verbindungszapfen zum Antriebsradsegmentgrundkörper verstärkt ausgebildet ist und vorzugsweise in Übergangsradien vom Antriebsradsegmentkörper zum Verbindungszapfen von R = 5 mm bis 10 mm ausgeführt wird.

17. Antriebsradsegment nach den Ansprüchen 15 und 16 **dadurch gekennzeichnet,** daß jedes Segment weniger als drei Zähne aufweist.

18. Antriebsradsegment nach einem der Ansprüche 15 bis 17, **dadurch gekennzeichnet,** daß die Werkstoffe nach Anspruch 15 so in bzw. an einen Grundkörper aus Stahl, vorzugsweise Vergütungsstahl, Guß, vorzugsweise Sphäroguß oder aus Werkstoffen nach Anspruch 15 gefügt werden, daß durch spezielle Verfahren (z.B. Kleben, Löten, Gießen u.ä.) die Zähne des Antriebsradsegmentes ganz oder teilweise aus Werkstoffen gemäß Anspruch 15 ausgebildet sind.

19. Antriebsradsegment nach einem der Ansprüche 16,17 und 18, vollständig oder teilweise bestehend aus Werkstoffen gemäß Anspruch 15, **dadurch gekennzeichnet,** daß die Zahnform so ausgebildet ist, daß ein Zahn den Bereich von zwei Zähnen bei herkömmlichen Ausführungsformen umfaßt.

20. Antriebsradsegment gemäß einem der Ansprüche 15 bis 19, **dadurch gekennzeichnet,** daß die Verbindungselemente zwischen Antriebsradsegmentgrundkörper bzw. Antriebsradgrundscheibe und Zahn durch spezielle geometrische Formen, vorzugsweise einer schwalbenschwanzartigen Geometrie, ausgeführt sind, auf deren Grundlage ein formschlüssiges Verbinden beider Elemente durch Angießen möglich wird.

21. Antriebsradsegment gemäß einem der Ansprüche 15 bis 20, **dadurch gekennzeichnet,** daß zwischen den Schnittstellen von Antriebsradsegment und Antriebsradgrundscheibe sowie Antriebsradsegmentgrundkörper und Zähnen bzw. Zahneinsätzen duktile Zwischenschichten eingebracht sind, die zum einen charakterisiert sind durch ein direktes Aufbringen der duktilen Schichtaus modifizierten Werkstoffen gemäß Anspruch 1 bzw. anderen geeigneten Werkstoffen auf die Antriebsradgrundscheibe, das Antriebsradsegment, den Antriebsradsegmentgrundkörper und/oder die Zähne bzw. Zahnteile bzw. daß die duktile Schicht als separates Teil zwischen den Verbindungselementen eingebracht ist.

22. Antriebsradgrundscheibe aus Stahl, vorzugsweise Vergütungsstahl, Guß, vorzugsweise Sphäroguß, sowie Werkstoffen nach Anspruch 15, **dadurch gekennzeichnet,** daß diese Antriebsradgrundscheibe konstruktiv derart ausgeführt ist, vorzugsweise durch Verstärkungen im Verbindungsbereich zum Antriebsradsegment, daß, unter Berücksichtigung der Festigkeitseigenschaften der Werkstoffe nach Anspruch 15, eine hinreichende Festigkeit und Stabilität der Gesamtverbindung "Antriebsradgrundscheibe-Antriebsradsegment" gewährleistet ist.

23. Antriebsrad aus Stahl, vorzugsweise Vergütungsstahl, Guß, vorzugsweise Sphäroguß, sowie Materialien nach Anspruch 15,

dadurch gekennzeichnet, daß adäquate konstruktive Modifizierung zu bisher üblichen Ausführungsformen realisiert sind, die, unter Berücksichtigung der speziellen Festigkeitseigenschaften der Werkstoffe nach Anspruch 15, sowie möglichen Werkstoffkombinationen nach Anspruch 18 eine hinreichende Stabilität und Festigkeit des Antriebsrades gewährleistet und konstruktive Modifizierungen gemäß den Ansprüchen 16 bis 21 realisiert sind.

24. Gleiskette für Kettenfahrzeuge nach einem der Ansprüche 1 bis 5,
dadurch gekennzeichnet, daß die Kettenbuchse im Innenbereich der Buchse, das heißt, im Gelenkbereich zwischen äußerer Bolzenkontur (Bolzenmantel) und innerer Buchsenkontur (Buchseninnenmantel) konstruktiv so ausgelegt ist, daß die Innenkontur der Buchse sich der Bolzenkontur, die sich bei Belastung der Ketten durch Biegung des Bolzens ergibt, annähert, wobei die Kettenbuchse alternativ aus Stahl besteht.

25. Gleiskette nach Anspruch 24,
dadurch gekennzeichnet, daß die Kettenbuchse aus den in den Ansprüchen 6 bis 14 und Ansprüchen 15 bis 23 angegebenen Materialien unter Zugrundelegung der dort festgelegten Materialwerte und Spezifikationen bzw. darauf auf bauender Bauteilauslegungen und -dimensionierungen im Innenbereich der Buchse gemäß Anspruch 24 ausgelegt ist.

26. Gleiskette nach Anspruch 24 oder 25,
dadurch gekennzeichnet, daß der Innenkonturbereich der Buchsen bezogen auf die Mündungsausläufe der Buchsen oder auch bezogen auf den Bereich von der Buchsenmitte bis zu den Buchsenenden (Buchsenstirnseiten) einer im wesentlichen stetigen, nicht linearen Funktion, vorzugsweise der durch die Biegelinie des Bolzens vorgegebenen Funktion angenähert ist, dies insbesondere bezogen auf die Betrachtung des Bolzens als einseitig (mittig) eingespannten Stab, analytisch in der Form

$$y = K \left(1 - \frac{3x}{2\,l} + \frac{1}{2}\frac{x^3}{l^3}\right)$$

oder bei Betrachtung als beidseitig eingespannten Bolzen in der Form

$$y = K^* \left(\frac{x_3}{l^2} - \frac{4x^3}{3\,l^3}\right),$$

wobei mit K und K* Faktoren bezeichnet sind, die sich aus der wirkenden Kraft, sowie Material- und Dimensionierungskenngrößen ergeben und l der ganzen bzw. halben Bolzenlänge entspricht.

27. Gleiskette nach einem der vorhergehenden Ansprüche, dadurch gekennzeichnet, daß in Abhängigkeit vom konkreten Anwendungsfall und den Fertigungsmöglichkeiten auch andere Funktionen realisiert werden, beispielsweise eine korbbogenförmig gewölbte Kontur mit unterschiedlichen Radienausführungen, eine Potenzfunktion, eine Expotentialfunktion oder eine Logarithmusfunktion.

## Claims

1. A crawler chain for tracked vehicles, in particular chain-driven construction vehicles, consisting of chain bushings, chain studs and chain links made of steel, wherein the ends of the inner chain links are pressed onto the chain bushing, the ends of the outer chain links are pressed onto the ends of the chain studs extending beyond the bushing and the chain stud passes through the chain bushing, **characterised in that** the chain bushing (1) is made of composite fibre materials, engineering ceramics and ceramic-ceramic composite materials on a base of $Si_3N_4$ (silicon nitride) having a sinter additive of less than 15 per cent by weight.

2. A crawler chain according to Claim 1, **characterised in that** the press fit between chain link (4) and chain bushing (1) with respect to a necessary tolerance field of the bore of the chain link (4) forming the bushing eye and with respect to a tolerance field of the external diameter of the chain bushing (1) is regulated so that, on the basis of the lower modulus of extension of the chain bushings (1) in relation to steel in the press fit with the steel material of the chain link (4), a fit is produced which guarantees a pressing attributed to elastic deformation.

3. A crawler chain according to Claim 1 or 2, wherein the crawler chain comprise chain studs having an axial blind hole recess and a radial transverse recess, which are filled with low-oil or low-fat lubricants and the axial blind hole recess of which can be closed at its open end by means of suitable closing means, between chain stud and chain bushing a lubricating channel is provided, which is closed axially outwardly by sealing means which are disposed between the end side of the chain bushing and the corresponding face of the outer chain link, **characterised in that** the sealing means are formed

a) by an elastic seal (13) (sealing ring) and a bearing ring (14) lying radially inwardly in relation thereto, preferably made from the material specified in the characterising part of Claim 1, with the bearing ring (14) being a separate part or being moulded on the end sides of the chain bushings (moulded-on part 15),
b) by a sliding ring (16) formed by the end side of the bushing and moulded thereon and a floating ring seal (17) made from the same material and having elastic spring means (18), which seal is forced by the spring means (18), which are supported axially opposite the end face of the bushing at parts of the outer chain link (3), to abut against the sliding ring (16).

4. A crawler chain according to one of Claims 1 to 3, **characterised in that** the chain stud (2) is made from the material specified in the characterizing part of Claim 1.

5. A crawler chain according to Claim 4, **characterised in that** the press fit is produced between chain stud (2) and chain link (3) as specified in Claim 2.

6. A crawler chain for tracked vehicles according to one of Claims 1 to 5, **characterised in that** the chain bushing (101) is made from hard metal, composite fibre materials, ceramic-ceramic composite materials and/or engineering ceramics on a base of $Si_3N_4$ (silicon nitride) having a sinter additive of less than 15 percent by weight, a fracture rate in the subcritical range, a fracture toughness of less than 20 MPa $\sqrt{m}$ and high homogeneity of the material when a Weibull modulus of greater than 10, preferably greater than 20, is achieved.

7. A crawler chain according to one of Claims 1 to 6, **characterised in that** the surfaces (inner surface 105 and outer surface 106) and also the end faces (107) of the bushings (101) are machined in compliance with the requirements which are placed on the materials mentioned in Claims 1 or respectively 6 with respect to behaviour under abrasion and production of press fit, preferably in the meshing region, but in appropriate circumstances are non-machined in the bore and also the end faces, i.e. in particular these surfaces comply with a surface roughness (without further machining) produced in the technically common methods of pressing, hot-pressing, sinter-pressing, sintering, gas-pressure sintering, or similar technologies from materials according to Claim 1 or 6 and are provided with tolerances in accordance with the requirements of these manufacturing processes and respectively of the corresponding materials.

8. A crawler chain according to one of the preceding Claims, **characterised in that** the bushing is constructed as a journal bushing, wherein the journal (108) is constructively designed so that, taking into consideration the design of the driving and guide wheel of a chain drive or respectively of a chain guide, the diameter of the bushing complies with the strength-optimal requirements with respect to the use of materials specified in Claim 1 or 6, the surface roughness of the bushing in the journal or meshing region corresponds to the previously common embodiment, but preferably corresponds to that of a pressed, hot-pressed, sinter-pressed, sintered or gas-pressure sintered embodiment or respectively for the materials specified in Claim 1 or 6 manufactured in accordance with similar technologies and in fact without further machining and is provided with tolerances in accordance with the requirements of these manufacturing methods or of the corresponding materials, with the radii (109) in the transition region between the pressed region of the bushing (101) and the journal (108) being designed so that, in accordance with the requirements of the materials according to Claim 1 or 6, optimal strength geometry is achieved, and the radius R = 3 mm to 8 mm is preferably produced.

9. A crawler chain according to one of the preceding Claims, **characterised in that** the joint of the chain is designed so that the bushing and stud in the previously common designs, are combined to make one part, i.e. a compact stud (110), made of steel, but preferably also of materials specified in Claim 1 or 6, and hinging is made possible by a loose fit between the eye of the chain link (104) lying internally in the link joint and the compact stud (110).

10. A crawler chain according to Claim 9, **characterised in that** the press fit between the eye of the link (103) lying outwardly in the link joint and the compact stud (110) is designed so that the diameter ratios comply with the requirements for producing press fit resulting from the use of the materials according to Claim 1 or 6 and the diameter of the compact stud (110) is derived from the strength requirements for the use of the materials according to Claim 1 or 6 in chains of the generic type.

11. A crawler chain according to one of the two preceding Claims, **characterised in that** the contour of the outer chain link for creating the press fit is chosen so that, taking into consideration the conditions which are placed by the material on the press fit, an optimal contour geometry is produced and between the eye of the link (103) and the compact stud (110) a surface pressure is produced which guarantees the frictional transmission of longitudinal forces and turning moments without additional precautions against displacement and twisting.

12. A crawler chain according to one of the three preceding Claims, **characterised in that** the dimensioning of the loose fit (112) between the eye of the inner link and the compact stud (110) is chosen so that hinging is easily made possible, however at the same time the material ring of the link eye complies with respect to diameter, i.e. in relation to its height (h), with the strength requirements for the chain and its width (b) is designed so that by the use of the materials specified in Claim 1 or 6 or respectively by special machining (special grinding, polishing, lapping) the abrasion between the link eye (104) and compact stud (110) is optimised so that this abrasion is not greater than the abrasion between drive wheel tooth and the compact stud (110), relative to adequate strength of the compact stud (110) for the corresponding application.

13. A crawler chain according to one of the preceding Claims,
characterised in that the compact stud (110) is made of metal or preferably one of the materials according to Claim 1 or 6,
in that between the eye of the inner link (104) and the compact stud (110) a ring element made of metal or preferably the material specified in Claim 1 or 6, which is then provided with a considerably greater thickness, whereby a press fit is constructed between the eye of the inner chain link (104) and the ring part, while the ring part is disposed with loose fit in relation to the compact stud (110), or however, in that press fit is produced between the ring and the compact stud (110), while the eye of the inner link is disposed with clearance in relation thereto.

14. A crawler chain according to the preceding Claim,
characterised in that a collar, which extends in the gap between the eye of the inner link (104) and the eye of the outer chain link (103) and serves as a spacer for the hinge gap, is moulded on the ring, with a reduction in wear between the adjacent faces of the eyes of the links simultaneously being achieved by the collar.

15. A drive wheel or drive wheel main disk having drive wheel segments for driving crawler chains, conveying chains and similar drive systems,
characterised in that the entire drive wheel segment or the teeth of the segment or parts of the teeth of the segment are made from composite fibre materials, ceramic-ceramic composite materials and engineering ceramics or respectively high-tech ceramics made of wear-resistant iron-based sintered materials having a particularly preferably abrasion-reducing protective layer and an initial powder of ferrochromium and iron as the matrix materials and boron carbide as the hard material phase or respectively of zircon oxides or on the base of non-oxidic ceramics, such as, for example, $Si_3N_4$ (silicon nitride), having a sinter additive of less than 15 per cent by weight, the cracking rate in the material lies in the subcritical range throughout the entire operating period, the fracture toughness $K_{Ic}$ does not drop below a value of preferably 5 MPa $\sqrt{m}$ and the strength and toughness is adjusted by using and metering suitable additives to a defined value, whereby in particular the homogeneity of the material is ensured and the scattering of the characteristic values of the materials, in particular the strength, is fixed by the Weibull modulus m of more than 10, preferably more than 20.

16. A drive wheel segment according to Claim 15,
characterised in that the segment has a maximum of one to three teeth, the connecting bores of the segment may be modified with respect to number so that adequate strength of the connection between drive wheel main disk and drive wheel segment is achieved in compliance with the special material property of the materials specified in Claim 15, and the connecting pins at the drive wheel segment are designed so that a connection (e.g. screw connection) with the drive wheel main disk becomes possible taking into consideration the special strength properties of the materials according to Claim 15,
and in that preferably the transition from the connecting pin to the base member of the drive wheel segment is reinforced and is preferably performed in transitional radii from the member of the drive wheel segment to the connecting pin of R = 5 mm to 10 mm.

17. A drive wheel segment according to Claims 15 and 16,
characterised in that each segment has less than three teeth.

18. A drive wheel segment according to one of Claims 15 to 17,
characterised in that the materials according to Claim 15 are added in or respectively to a base member of steel, preferably heat-treatable steel, cast material, preferably spheroidal graphite iron or materials according to Claim 15, in such a manner that the teeth of the drive wheel segment are completely or partially constructed from materials according to Claim 15 by special processes (e.g. bonding, soldering, casting, inter alia).

19. A drive wheel segment according to one of Claims 16, 17 and 18, completely-or partly made from materials specified in Claim 15,
characterised in that the tooth shape is designed so that a tooth occupies the region of two teeth in conventional embodiments.

20. A drive wheel segment according to one of Claims 15 to 19,
characterised in that the connecting elements between base member of the drive wheel segment or respectively main disk of the drive wheel and the tooth are performed by special geometric shapes, preferably a dovetailed geometry, on the basis of which a form-fit connection of both elements by integral casting becomes possible.

21. A drive wheel segment according to one of Claims 15 to 20,
characterised in that ductile intermediate layers are placed between the interfaces of the drive wheel segment and drive wheel main disk and also base member of the drive wheel segment and teeth or respectively tooth inserts, which layers are firstly characterised by a direct application of the ductile layer, made of modified materials in accordance with Claim 1 or other suitable materials, onto the main disk of the drive wheel, the drive wheel segment, the base member of the drive wheel segment and/or the teeth or tooth parts or in that the ductile layer is placed as a separate part between the connecting elements.

22. A drive wheel main disk made of steel, preferably heat-treatable steel, cast material, preferably spheroidal graphite iron, and also materials according to Claim 15,
characterised in that this main disk of the drive wheel is constructively designed, preferably by reinforcements in the region connecting with the driving wheel segment, so that, taking into consideration the strength properties of the materials specified in Claim 15, adequate strength and stability of the entire connection comprising the "drive wheel main disk and drive wheel segment" is guaranteed.

23. A drive wheel made of steel, preferably heat-treatable steel, cast material, preferably spheroidal graphite iron, and also materials according to Claim 15,
characterised in that adequate constructive modifications are made to the previously common embodiments, which, taking into consideration the special strength properties of the materials according to Claim 15, and also possible material combinations according to Claim 18, guarantees an adequate stability and strength of the drive wheel and constructive modifications are made in accordance with Claims 16 to 21.

24. A crawler chain for tracked vehicles according to one of Claims 1 to 5,
characterised in that in the inner region of the bushing, i.e. in the joint region between outer stud contour (stud surface) and inner bushing contour (inner surface of the bushing), the chain bushing is constructively designed so that the inner contour of the bushing becomes approximately the same as the stud contour, which is produced by the bending of the stud when the chains are loaded, with the chain bushing alternatively being made of steel.

25. A crawler chain according to Claim 24,
characterised in that the chain bushing is constructed from the materials specified in Claims 6 to 14 and Claims 15 to 23 on the basis of the material values and specifications given there and respectively component designs and dimensions based thereon in the inner region of the bushing as specified in Claim 24.

26. A crawler chain according to Claim 24 or 25,
characterised in that the inner contour region of the bushings relative to the openings of the bushings or also relative to the region of the bushing centre right to the ends of the bushings (end sides of the bushings) is approximated to a substantially continuous, non-linear function, preferably the function given by the bending line of the stud, in particular relative to the consideration of the stud as a bar fixed at one end (centrally), analytically in the form

$$y = K \left(1 - \frac{3x}{2l} + \frac{1x^3}{2l^3}\right)$$

or when considered as a stud fixed on both sides in the form

$$y = K^* \left(\frac{x_3}{l^2} - \frac{4x^3}{3l^3}\right),$$

in which K and K* designate factors which are produced from the acting force, and also characteristic quantities for material and dimensioning, and l corresponds to the entire stud length or half the stud length.

27. A crawler chain according to one of the preceding Claims,
characterised in that other functions may also be performed, for example a compound-curved contour having varying radius designs, a power function, an exponential function or a logarithmic function, in dependence on the concrete application and the manufacturing possibilities.

**Revendications**

1. Chenille pour véhicules à chenilles, et en particulier pour véhicules de chantiers à chenilles, constituée par des douilles de chenille, des axes de chenille et des maillons de chenille en acier, cependant que les extrémités intérieures des maillons de chenille sont emmanchées par pression sur la douille de chenille, que les extrémités extérieures des maillons de chenille sont emmanchées par pression sur les extrémités des axes de chenille qui font saillie au-delà de la douille et que la douille de chenille est traversée par l'axe de chenille, caractérisée par le fait que la douille de chenille (1) est constituée par des matériaux composites à fibres, par des céramiques industrielles et par des matériaux composites céramique-céramique à base de $Si_3N_4$ (nitrure de silicium) comprenant moins de 15% en poids d'additif de frittage.

2. Chenille selon la revendication 1, caractérisée par le fait que l'ajustement serré entre le maillon de chenille (4) et la douille de chenille (1) est réglé, quant à une zone de tolérance nécessaire au perçage du maillon de chenille (4) qui constitue l'ouverture de la douille et quant à une zone de tolérance pour le diamètre extérieur de la douille de chenille (1), d'une manière telle qu'il se produise dans la liaison serrée avec l'acier du maillon de chenille (4), du fait que le coefficient de dilatation des douilles de chenille (1) est plus faible que celui de l'acier, un ajustement qui assure un serrage devant être attribué à une déformation élastique.

3. Chenille selon la revendication 1 ou 2, dans laquelle la chenille comprend des axes de chenille pourvus d'un évidement borgne axial et d'un évidement transversal radial qui sont remplis d'un lubrifiant analogue à de l'huile ou à de la graisse et dont l'évidement borgne axial peut être fermé à son extrémité ouverte par des moyens de fermeture appropriés, et dans laquelle une fente de lubrification est formée entre l'axe de chenille et la douille de chenille, cette fente étant fermée extérieurement dans le sens axial par des moyens d'étanchéité qui sont disposés entre le côté frontal de la douille de chenille et la surface correspondante du maillon de chenille extérieur, caractérisée par le fait que les moyens d'étanchéité sont constitués par :

a) un joint d'étanchéité élastique (13) (bague d'étanchéité) et une bague d'appui (14) qui est située intérieurement par rapport à celui-ci dans le sens radial et qui est constituée de préférence par le matériau selon la partie caractérisante de la revendication 1, la bague d'appui (14) étant une pièce séparée ou étant formée sur les côtés frontaux des douilles de chenille (partie formée 15),
b) une bague de glissement (16) qui est constituée par le côté frontal de la douille et qui est formée sur celui-ci, ainsi qu'un joint d'étanchéité annulaire de glissement (17) qui est constitué par le même matériau, qui est pourvu d'un moyen élastique (18) et qui est serré en appui sur la bague de glissement (16) par le moyen élastique (18), celui-ci s'appuyant sur des parties du maillon de chenille extérieur (3) en face de la surface frontale de la douille dans le sens axial.

4. Chenille selon l'une des revendications 1 à 3, caractérisée par le fait que l'axe de chenille (2) est constitué par le matériau selon la partie caractérisante de la revendication 1.

5. Chenille selon la revendication 4, caractérisée par le fait que l'ajustement serré entre l'axe de chenille (2) et le maillon de chenille (3) est réalisé selon la revendication 2.

6. Chenille pour véhicules à chenilles selon l'une des revendications 1 à 5, caractérisée par le fait que la douille de chenille (101) est constituée par du métal dur. par des matériaux composites à fibres, par des matériaux composites céramique-céramique et/ou par des céramiques industrielles à base de $Si_3N_4$ (nitrure de silicium) comprenant moins de 15% en poids d'additif de frittage et présentant une croissance à la rupture située dans la zone sous-critique, une ténacité à la rupture inférieure à 20 MPa. $\sqrt{m}$ et une forte homogénéité du matériau, tout en réalisant un module de Weinbull qui est supérieur à 10, et de préférence supérieur à 20.

7. Chenille selon l'une des revendications 1 à 6, caractérisée par le fait que les surfaces (intérieure 105 et extérieure 106) des douilles (101), ainsi que leurs surfaces frontales (107), sont traitées mécaniquement en correspondance avec les exigences qui sont imposées aux matériaux cités dans la revendication 1 ou 6, respectivement, en ce qui concerne le comportement à l'usure et la réalisation d'un ajustement serré, mais en n'étant pas traitées de préférence dans la région de l'interpénétration des dents le cas échéant, dans le perçage, ainsi que sur les surfaces frontales, ce qui veut dire en particulier que ces surfaces correspondent à des rugosités superficielles (sans autre traitement) qui prennent naissance dans les procédés techniquement habituels de compression, de compression à chaud, de frittage sous pression, de frittage, de frittage sous pression de gaz ou dans des technologies similaires appliquées aux matériaux selon la revendication 1 ou 6, respectivement et qu'elles présentent des tolérances selon les exigences de ces procédés de fabrication ou des matériaux correspondants, respectivement.

8. Chenille selon l'une des revendications précédentes, caractérisée par le fait que la douille est réalisée sous la forme d'une douille à tourillon, le tourillon (108) étant conçu par construction d'une manière telle qu'en prenant en considération la réalisation du barbotin et de la poulie de renvoi destinés à un entraînement de la chenille ou à un guidage de la chenille, respectivement, le diamètre de la douille corresponde aux exigences de résistance mécanique optimale en ce qui concerne l'utilisation de matériaux selon la revendication 1 ou 6, et que la rugosité superficielle de la douille dans la zone du tourillon ou dans la zone d'interpénétration des dents respectivement corresponde à la forme de réalisation habituelle jusqu'alors, mais en correspondant de préférence à celle d'une forme comprimée, comprimée à chaud, frittée sous pression, frittée ou frittée sous une pression de gaz, respectivement, ou fabriquée selon des technologies analogues pour les matériaux selon la revendication 1 ou 6, et ce, sans autre traitement et avec des tolérances conformes aux exigences de ces procédés de fabrication ou des matériaux correspondants, respectivement, cependant que les rayons (109) présents dans la région de transition entre la zone de serrage de la douille (101) et du tourillon (108) sont réalisés d'une manière telle que l'on obtienne une géométrie de résistance mécanique optimale qui corresponde aux exigences des matériaux selon la revendication 1 ou 6, le rayon étant de préférence réalisé avec une valeur R comprise entre 3 mm et 8 mm.

9. Chenille selon l'une des revendications précédentes, caractérisée par le fait que l'articulation de la chenille est réalisée d'une manière telle que la douille et l'axe des réalisations habituelles jusqu'alors soient réunis pour donner une seule pièce, à savoir un axe compact (110) qui est constitué par de l'acier, mais de préférence par des matériaux selon la revendication 1 ou 6 et que l'articulation soit rendue possible par un jeu entre l'ouverture du maillon de chenille (104) qui est situé à l'intérieur dans la liaison articulée et l'axe compact (110).

10. Chenille selon la revendication 9, caractérisée par le fait que l'ajustement serré entre l'ouverture du maillon de chenille (103) qui est situé à l'extérieur dans la liaison articulée et l'axe compact (110) est réalisé d'une manière telle que les rapports des diamètres correspondent aux exigences qui résultent de l'utilisation des matériaux selon la revendication 1 ou 6 pour la réalisation de l'ajustement serré, et que le diamètre de l'axe unitaire (110) soit déduit des exigences de résistance mécanique pour l'utilisation des matériaux selon la revendication 1 ou 6 dans des chenilles du genre selon le préambule de la revendication 1.

11. Chenille selon l'une des deux revendications précédentes, caractérisée par le fait qu'en vue de la réalisation de l'ajustement serré, le contour du maillon de chenille extérieur est choisi en prenant en considération les conditions qui sont imposées à l'ajustement serré par le matériau d'une manière telle qu'il se produise une géométrie optimale pour le contour et que l'on obtienne, entre l'ouverture du maillon (103) et l'axe compact (110), un serrage entre les surfaces qui assure la transmission par frottement des forces longitudinales et des couples sans blocage supplémentaire destiné à empêcher le coulissement et la rotation.

12. Chenille selon l'une des trois revendications précédentes, caractérisée par le fait que les dimensions du jeu (112) entre l'ouverture du maillon intérieur et l'axe compact (110) sont choisies d'une manière telle qu'une articulation soit rendue facilement possible, mais qu'en même temps la bague de matière qui entoure l'ouverture du maillon corresponde par son diamètre, rapporté à sa hauteur (h) aux exigences de résistance mécanique de la chenille, et soit réalisée quant à sa largeur (b) d'une manière telle que l'utilisation des matériaux selon la revendication 1 ou 6 ou des traitements spéciaux (rectification, polissage, rodage à la poudre abrasive), respectivement, rendent déjà suffisamment optimale l'usure entre l'ouverture du maillon (104) et l'axe compact (110) pour que cette usure ne soit pas supérieure à l'usure entre la dent du barbotin et l'axe compact (110) lorsqu'elle est rapportée à une résistance mécanique suffisante de l'axe compact (110) pour l'utilisation correspondante.

13. Chenille selon l'une des revendications précédentes, caractérisée par le fait que l'axe compact (110) est constitué par du métal ou de préférence par l'un des matériaux selon la revendication 1 ou 6 et par le fait qu'est disposé entre l'ouverture du maillon intérieur (104) et l'axe compact (110) un élément annulaire constitué par du métal ou, de préférence, par le matériau selon la revendication 1 ou 6, auquel cas il présente en tout cas une épaisseur nettement supérieure, cependant qu'un ajustement serré est réalisé entre l'ouverture du maillon de chenille intérieur (104) et la partie annulaire, tandis que la partie annulaire est disposée avec un jeu par rapport à l'axe compact (110), ou encore qu'un ajustement serré est produit entre l'anneau et l'axe compact (110), l'ouverture du maillon intérieur étant disposée avec un jeu par rapport à l'anneau.

14. Chenille selon la revendication précédente, caractérisée par le fait qu'est formé sur l'anneau un collet qui s'étend dans la fente ménagée entre l'ouverture du maillon de chenille intérieur (104) et l'ouverture du maillon de chenille extérieur (103) et qui sert d'entretoise à la fente de l'articulation, ce collet réalisant en même temps une diminution de l'usure entre les surfaces voisines entre elles des ouvertures des maillons.

15. Barbotin ou disque de base de barbotin pourvu de segments de barbotin pour l'entraînement de chenilles, de chaînes transporteuses et de systèmes d'entraînement similaires, caractérisé par le fait que l'ensemble du segment de barbotin ou les dents du segment ou des parties des dents du segment sont constituées par des matériaux composites à fibres, par des matériaux composites céramique-céramique et par des céramiques industrielles ou, respectivement, par des céramiques à performances élevées qui sont constituées par des matériaux frittés à base de fer résistant à l'usure, qui sont pourvues, d'une manière particulièrement préférée, d'une couche protectrice diminuant l'usure et dont la poudre de départ comprend du ferrochrome et du fer comme matériaux de la matrice et du carbure de bore comme phase dure, ou, respectivement, par des oxydes de zirconium ou sur la base de céramique sans oxygène, comme par exemple du $Si_3N_4$ (nitrure de silicium), comprenant moins de 15% en poids d'additif de frittage, que la croissance à la rupture dans le matériau est située dans la zone sous-critique pendant la totalité de la durée du fonctionnement, que la ténacité à la rupture $K_{Ic}$ n'est pas inférieure à 5 MPa. √m, de préférence, et que la résistance mécanique et la ténacité sont réglées à une valeur définie grâce à l'utilisation et au dosage d'additifs appropriés, cependant que l'homogénéité du matériau est en particulier assurée et que la dispersion des valeurs caractéristiques du matériau, et en particulier de la résistance mécanique, est fixée par le fait que le module de Weinbull m est supérieur à 10, et de préférence supérieur à 20.

16. Segment de barbotin selon la revendication 15, caractérisé par le fait que le segment comporte au maximum une à trois dents, que le nombre des perçages de liaison du segment est modifié d'une manière telle que l'on obtienne une résistance mécanique suffisante pour la liaison entre le disque de base du barbotin et le segment de barbotin en correspondance avec la propriété particulière des matériaux selon la revendication 15, et que les goujons de liaison sont conformés sur le segment de barbotin d'une façon telle qu'une liaison (par exemple par vissage) avec le disque de base du barbotin soit possible en prenant en considération les propriétés particulières de résistance mécanique des matériaux selon la revendication 15, et par le fait que la transition entre le goujon de liaison et le corps de base du segment de barbotin est de préférence réalisée d'une façon renforcée, de préférence avec des rayons de transition R entre le corps du segment de barbotin et le goujon de liaison qui sont compris entre 5 mm et 10 mm.

17. Segment de barbotin selon les revendications 15 et 16, caractérisé par le fait que chaque segment comporte moins de trois dents.

18. Segment de barbotin selon l'une des revendications 15 à 17, caractérisé par le fait que les matériaux selon la revendication 15 sont assemblés dans un corps de base ou, respectivement, sur celui-ci qui est constitué par de l'acier, et de préférence par de l'acier traité, par de la fonte, et de préférence par de la fonte sphéroïdale, ou par des matériaux selon la revendication 15, d'une manière telle qu'au moyen de procédés spéciaux (par exemple collage, soudage, coulée, etc.), les dents du segment de barbotin soient constituées totalement ou partiellement par des matériaux selon la revendication 15.

19. Segment de barbotin selon l'une des revendications 16, 17 et 18, constitué totalement ou partiellement par des matériaux selon la revendication 15, et caractérisé par le fait que les dents sont conformées d'une manière telle qu'une dent recouvre la zone de deux dents des formes de réalisation classiques.

20. Segment de barbotin selon l'une des revendications 15 à 19, caractérisé par le fait que les éléments de liaison entre le corps de base du segment de barbotin ou le disque de base du barbotin, respectivement, et la dent sont réalisés grâce à des formes géométriques particulières, et de préférence grâce à une géométrie analogue à une queue d'aronde, sur la base desquelles il est possible de réaliser par coulée une liaison des deux éléments par conjugaison des formes.

21. Segment de barbotin selon l'une des revendications 15 à 20, caractérisé par le fait qu'entre les endroits d'intersection du segment de barbotin et du disque de base du barbotin, ainsi qu'entre le corps de base du segment de barbotin et les dents ou les garnitures de dents, respectivement, sont insérées des couches intermédiaires ductiles qui sont caractérisées d'une part par une application directe de la couche ductile constituée par des matériaux modifiés selon la revendication 1 ou par d'autres matériaux appropriés respectivement, sur le disque de base du barbotin, sur le segment de barbotin, sur le corps de base du segment de barbotin et/ou sur les dents ou, respectivement, sur les parties de dents, ou, respectivement, par le fait que la couche ductile est insérée entre les éléments de liaison sous la forme d'une pièce séparée.

22. Disque de base de barbotin en acier, et de préférence en acier traité, ou en fonte et de préférence en fonte sphéroïdale, ou en matériaux selon la revendication 15, caractérisé par le fait que ce disque de base de barbotin est réalisé par construction, de préférence grâce à des renforcements dans la zone de liaison avec le segment de barbotin, d'une manière telle qu'en prenant en considération les propriétés de résistance mécanique des matériaux selon la revendication 15, une résistance mécanique et une stabilité suffisantes soient assurées pour la liaison d'ensemble entre le disque de base du barbotin et le segment de barbotin.

23. Barbotin en acier, et de préférence en acier traité, ou en fonte, et de préférence en fonte sphéroïdale, ou en matériaux selon la revendication 15, caractérisé par le fait qu'une modification appropriée est apportée à la construction des formes de réalisation habituelles jusqu'alors, et qu'en prenant en considération les propriétés de résistance mécanique particulières des matériaux selon la revendication 15, ainsi que des combinaisons possibles de matériaux selon la revendication 18, elle assure une stabilité et une résistance mécanique suffisantes du barbotin, des modifications constructives selon les revendications 16 à 21 étant réalisées.

**24.** Chenille pour véhicules à chenilles selon l'une des revendications 1 à 5, caractérisée par le fait que la douille de chenille est conçue par construction dans la zone intérieure de la douille, c'est-à-dire dans la zone de l'articulation entre le contour extérieur de l'axe (surface latérale de l'axe) et le contour intérieur de la douille (surface latérale intérieure de la douille) d'une manière telle que le contour intérieur de la douille soit voisin du contour de l'axe qui résulte de la flexion de l'axe lorsque la chenille est chargée, la douille de la chenille étant constituée en variante par de l'acier.

**25.** Chenille pour véhicules à chenilles selon la revendication 24, caractérisée par le fait que la douille de la chenille constituée par les matériaux indiqués dans les revendications 6 à 14 et dans les revendications 15 à 23 est conçue selon la revendication 24 en se basant sur les valeurs caractéristiques et sur les spécifications du matériau qui sont précisées à cet endroit ou, respectivement, sur des conceptions et des dimensions des éléments constitutifs qui reposent sur elles dans la zone intérieure de la douille.

**26.** Chenille selon la revendication 24 ou 25, caractérisée par le fait que la zone du contour intérieur des douilles rapportée aux sorties de l'embouchure des douilles, ou encore rapportée à la zone allant du milieu des douilles jusqu'aux extrémités des douilles (côtés frontaux des douilles) est voisine d'une fonction pour l'essentiel continue et non linéaire, et de préférence de la fonction qui est prédéterminée par la ligne de flexion de l'axe, et ce, en particulier, en considérant l'axe comme une poutre encastrée d'un côté (en son centre), sous la forme analytique :

$$y = K. \left( 1 - \frac{3.x}{2.l} + \frac{1.x^3}{2.l^3} \right)$$

ou, en le considérant comme un axe encastré des deux côtés, sous la forme :

$$y = K^*. \left( \frac{x^3}{l^2} - \frac{4.x^3}{3.l^3} \right)$$

où K et K* désignent des facteurs qui résultent des forces agissantes, ainsi que des valeurs caractéristiques des matériaux et des dimensions et l correspond à la longueur totale de l'axe ou à sa moitié, respectivement.

**27.** Chenille selon l'une des revendications précédentes, caractérisée par le fait qu'en fonction de l'application concrète et des possibilités de fabrication, on peut mettre également en oeuvre d'autres fonctions, comme par exemple un contour en forme de courbe en anse de panier dont les rayons sont réalisés différemment, une fonction puissance, une fonction exponentielle ou une fonction logarithmique.

Fig. 1

Fig. 2

Fig. 3

Fig. 6

Fig. 4

Fig. 5

Fig. 7

103   104   108   102   104   103

107   109   101   109   107

Fig. 8

103   104   110   104   103

b

h

112   112

Fig.9

Fig.10

*Fig. 11*

201

201

203

202

203

202

201

*Fig. 15*

201

204    204

*Fig. 16*

201

204

204    204    204

Fig.12

201

202

Fig.19b

201

Fig.19a

201

208

202

208

202

Fig. 13

Fig. 17

Fig. 18

201

207

205

217

206

202

202

207

Fig. 14

Fig.20

201

Fig.21

210    209    201

Fig.22

212   211  211   211

Fig.23

213

Fig.24a

216

215

214

Fig.24b

215

216

216

214

*Fig. 25 c*

*Fig. 25 a*

*Fig. 25 b*

Fig. 26    301    302

304    303

Fig. 28    307    306    305    307    308

307    305    306    308    307

*Fig. 27*

323

321

320

322